(19) Europäisches Patentamt
European Patent Office
Office européen des brevets

(11) EP 3 728 370 B1

(12) **EUROPÄISCHE PATENTSCHRIFT**

(45) Veröffentlichungstag und Bekanntmachung des Hinweises auf die Patenterteilung:
**04.10.2023 Patentblatt 2023/40**

(21) Anmeldenummer: **18816120.2**

(22) Anmeldetag: **18.12.2018**

(51) Internationale Patentklassifikation (IPC):
***C08G 18/48*** *(2006.01)* ***C08G 18/69*** *(2006.01)*
***C08G 18/75*** *(2006.01)* ***C08G 18/80*** *(2006.01)*
***C08G 18/10*** *(2006.01)* ***C08G 18/12*** *(2006.01)*
***C08G 18/24*** *(2006.01)* ***C09J 163/04*** *(2006.01)*
***C09J 175/08*** *(2006.01)* ***C09J 175/14*** *(2006.01)*

(52) Gemeinsame Patentklassifikation (CPC):
(C-Sets verfügbar)
**C09J 163/04; C08G 18/10; C08G 18/12; C08G 18/246; C08G 18/4854; C08G 18/698; C08G 18/755; C09J 175/08; C09J 175/14** (Forts.)

(86) Internationale Anmeldenummer:
**PCT/EP2018/085495**

(87) Internationale Veröffentlichungsnummer:
**WO 2019/121682 (27.06.2019 Gazette 2019/26)**

(54) **VERFAHREN ZUM STRUKTURELLEN VERBINDEN VON SUBSTRATEN MIT UNTERSCHIEDLICHEN THERMISCHEN LÄNGENAUSDEHNUNGS-KOEFFIZIENTEN**

METHOD FOR STRUCTURALLY JOINING SUBSTRATES WITH DIFFERENT THERMAL LENGTH EXPANSION COEFFICIENTS

PROCÉDÉ DE RACCORDEMENT STRUCTURAL DES SUBSTRATS À COEFFICIENT DE DILATATION THERMIQUE DIFFÉRENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2017 EP 17208668**

(43) Veröffentlichungstag der Anmeldung:
**28.10.2020 Patentblatt 2020/44**

(73) Patentinhaber: **SIKA TECHNOLOGY AG**
**6340 Baar (CH)**

(72) Erfinder:
- **RHEINEGGER, Urs**
  **8105 Regensdorf (CH)**
- **JENDOUBI, Elyes**
  **Suzhou, 215121 (CN)**
- **GALLO, Dominique**
  **8106 Adlikon bei Regensdorf (CH)**
- **KRÜGER, Christian**
  **8919 Rottenschwil (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(56) Entgegenhaltungen:
**EP-A1- 1 916 272**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08G 18/12, C08G 18/282;**
**C08G 18/12, C08G 18/285;**
**C08G 18/12, C08G 18/2865;**
**C09J 163/04, C09J 175/08;**
**C09J 163/04, C09J 175/14;**
**C09J 175/08, C08L 63/00;**
**C09J 175/14, C08L 63/00**

## Beschreibung

### Technisches Gebiet

Die Erfindung betrifft das Gebiet der hitzehärtenden Epoxidharzzusammensetzungen, insbesondere für das Verbinden von Substraten mit unterschiedlichen thermischen Ausdehnungskoeffizienten, insbesondere im Rohbau von Transportmitteln oder Weisswaren.

### Stand der Technik

Hitzehärtende Epoxidharzzusammensetzungen sind seit langem bekannt. Ein wichtiges Einsatzgebiet von hitzehärtenden Epoxidharzzusammensetzungen findet sich im Fahrzeugbau, insbesondere beim Verkleben im Rohbau von Transportmitteln oder Weisswaren. In beiden Fällen wird nach der Applikation der Epoxidharzzusammensetzung der verklebte Gegenstand in einem Ofen erhitzt, wodurch auch die hitzehärtende Epoxidharzzusammensetzung ausgehärtet wird.

EP 1916272 (A1) betrifft hitzehärtende Epoxidharzzusammensetzungen, welche mindestens ein Epoxidharz A mit durchschnittlich mehr als einer Epoxidgruppe pro Molekül, mindestens einen Härter B für Epoxidharze, welcher durch erhöhte Temperatur aktiviert wird, und mindestens ein endständig blockiertes Polyurethanprepolymer sowie mindestens ein Epoxidgruppenterminiertes Polyurethanprepolymer enthalten. Diese Epoxidharzzusammensetzungen eignen sich insbesondere als einkomponentige hitzehärtende Klebstoffe und zeichnen sich durch hohe mechanische Werte, hohe Glasübergangstemperaturen und hohe Schlagzähigkeiten aus.

Werden zwei Substrate mit unterschiedlichen thermischen Längenausdehnungskoeffizienten durch strukturelle Verklebung miteinander verbunden, führt der Aushärtungsschritt im Ofen bei Temperaturen von 120 - 220°C dazu, dass sich die beiden Substrate auf unterschiedliche Längen ausdehnen. Bei der nachfolgenden Abkühlung entsteht dadurch in der ausgehärteten Epoxidharzzusammensetzung eine hohe Spannung, welche entweder zum Versagen der Klebstoffverbindung, zu einer Verformung der Substrate oder zu einem sogenannten "Einfrieren" der Spannung in der Klebverbindung führt. Durch ein solches "Einfrieren" reagiert die Klebverbindung während der Lebensdauer wesentlich empfindlicher auf statische, dynamische und Stoßbelastungen, was zu einer Schwächung der Klebverbindung führen kann.

Es besteht deshalb ein Bedürfnis nach Verfahren zum strukturellen Verbinden von Substraten mit unterschiedlichen thermischen Längenausdehnungskoeffizienten mittels hitzehärtender Epoxidharzzusammensetzungen, welche einerseits ausreichende mechanische Eigenschaften für strukturelles Verbinden sicherstellen und andererseits zu Verbunden führen, welche den bei der Hitzehärtung auftretenden hohen Spannungen ohne Versagen der strukturellen Verbindung widerstehen.

### Darstellung der Erfindung

Aufgabe der vorliegenden Erfindung ist es daher, Verfahren zum strukturellen Verbinden von Substraten mit unterschiedlichen thermischen Längenausdehnungskoeffizienten mittels hitzehärtender Epoxidharzzusammensetzungen zur Verfügung zu stellen, welche einerseits ausreichende mechanische Eigenschaften für strukturelles Verbinden sicherstellen und andererseits zu Verbunden führen, welche den bei der Hitzehärtung auftretenden hohen Spannungen ohne Versagen der strukturellen Verbindung widerstehen.

Diese Aufgabe konnte überraschenderweise durch ein erfindungsgemässes Verfahren gemäss Anspruch 1 gelöst werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft ein Verfahren zur Verklebung von hitzestabilen Substraten, welches die Schritte umfasst:

i) Applizieren einer einkomponentigen hitzehärtenden Epoxidharzzusammensetzung auf die Oberfläche eines hitzestabilen Substrates **S1,** insbesondere eines Metalls;

ii) Kontaktieren der applizierten hitzehärtenden Epoxidharzzusammensetzung mit der Oberfläche eines weiteren hitzestabilen Substrates **S2,** insbesondere eines Metalls, wobei die Dicke der applizierten hitzehärtenden Epoxidharzzusammensetzung nach dem Schritt ii) ≥ 0.8 mm, insbesondere ≥ 1 mm, beträgt;

iii) Erhitzen der Zusammensetzung auf eine Temperatur von 100 - 220°C, insbesondere von 120 - 200°C, bevorzugt

zwischen 130 und 150°C, besonders bevorzugt zwischen 130 und 140°C.

Die einkomponentige hitzehärtende Epoxidharzzusammensetzung umfasst:

a) mindestens ein Epoxidharz **A** mit durchschnittlich mehr als einer Epoxidgruppe pro Molekül;
b) mindestens einen latenten Härter für Epoxidharze **B**;
c) mindestens einen Zähigkeitsverbesserer **D;**

wobei das Gewichtsverhältnis des mindestens einen Epoxidharz **A** mit durchschnittlich mehr als einer Epoxidgruppe pro Molekül zu dem mindestens einen Zähigkeitsverbesserer **D** von 0.3 - 2.2 beträgt,
und wobei es sich bei dem Zähigkeitsverbesserer **D** um ein endständig blockiertes Polyurethanprepolymer der Formel (**I**) handelt;

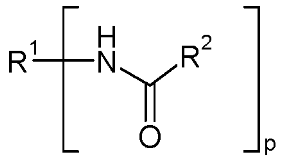 (I)

wobei $R^1$ für einen p-wertigen Rest eines mit Isocyanatgruppen terminierten linearen oder verzweigten Polyurethanprepolymers nach dem Entfernen der endständigen Isocyanatgruppen steht;
p für einen Wert von 2 bis 8 steht; und
$R^2$ steht für eine Blockierungsgruppe, welche sich bei einer Temperatur über 100°C abspaltet, wobei
$R^2$ unabhängig voneinander für einen Substituenten steht, welcher ausgewählt ist aus der Gruppe bestehend aus

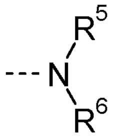, 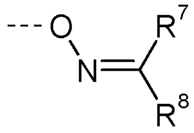, 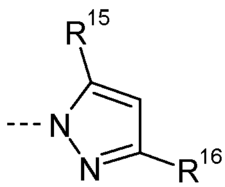 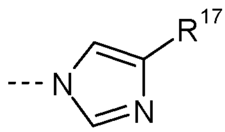,

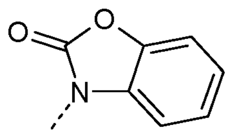

und

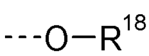,

wobei
$R^5$, $R^6$, $R^7$ und $R^8$ je unabhängig voneinander für eine Alkyl- oder Cycloalkyl- oder Aralkyl- oder Arylalkyl-Gruppe steht
oder $R^5$ zusammen mit $R^6$, oder $R^7$ zusammen mit $R^8$, einen Teil eines 4-bis 7-gliedrigen Rings bilden, welcher gegebenenfalls substituiert ist;
$R^{15}$, $R^{16}$ und $R^{17}$ je unabhängig voneinander für H oder für eine Alkylgruppe oder für eine Arylgruppe oder eine Aralkylgruppe stehen; und
$R^{18}$ für eine Aralkylgruppe oder für eine ein- oder mehrkernige substituierte oder unsubstituierte Aromatengruppe steht, welche gegebenenfalls aromatische Hydroxylgruppen aufweist.

Die einkomponentige hitzehärtende Epoxidharzzusammensetzung weist eine maximale Längenausdehnung **Max. Dehnung** von ≥ 1.65 mm auf, bestimmt in einem Zugscherversuch während dem Abkühlen einer erwärmten

ausgehärteten Zugscherprobe.

Die maximale Längenausdehnung Max. Dehnung wird in einem Zugscherversuch bei einer Zuggeschwindigkeit $V_{zug}$ von 0.40 mm/min gemessen.

Die Temperatur der Zugscherprobe des Zugscherversuchs beträgt bei Beginn der Messung 180°C, insbesondere 190°C, und bei Beginn der Messung wird die Zugscherprobe mit einer Abkühlgeschwindigkeite wird 40°C/min auf eine Temperatur von 25°C gekühlt und danach bei dieser Temperatur belassen.

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

Unter einem "Zähigkeitsverbesserer" wird in diesem Dokument ein Zusatz zu einer Epoxidharzmatrix verstanden, der bereits bei geringen Zuschlägen von ≥ 5 Gew.-%, insbesondere ≥ 10 Gew.-%, bezogen auf das Gesamtgewicht der Epoxidharzzusammensetzungen, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht $M_n$ einer oligomeren oder polymeren Mischung von Molekülen bezeichnet, welches üblicherweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Der Begriff "primäre Aminogruppe" bezeichnet im vorliegenden Dokument eine $NH_2$-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist. Demzufolge wird ein Amin, welches eine primäre Aminogruppe aufweist, als "primäres Amin" bezeichnet, ein solches mit einer sekundären Aminogruppe wird entsprechend als "sekundäres Amin" und ein solches mit einer tertiären Aminogruppe als "tertiäres Amin" bezeichnet.

Als "Raumtemperatur" wird im vorliegenden Dokument eine Temperatur von 23°C bezeichnet.

## Beschreibung Messmethode für maximale Längenausdehnung (Max. Dehnung) und maximale Kraft

Werden zwei Substrate, beispielsweiser Metalle oder faserverstärkte Kunststoffe, mit unterschiedlichen thermischen Längenausdehnungskoeffizienten ($\Delta\alpha$) durch strukturelle Verklebung, insbesondere im Karosserierohbau, miteinander verbunden, führt der Aushärtungsschritt im Ofen bei Temperaturen von 120 - 220°C, beispielsweise beim Durchlaufen eines Konvektionsofens, dazu, dass sich die beiden Substrate auf unterschiedliche Längen ausdehnen. Bei der nachfolgenden Abkühlung, beispielsweise beim Durchlaufen von Abkühlzonen, entsteht dadurch in der ausgehärteten Epoxidharzzusammensetzung eine hohe Spannung, welche entweder zum Versagen der Klebstoffverbindung, zu einer Verformung der Substrate oder zu einem sogenannten "Einfrieren" der Spannung in der Klebverbindung führt.

Um das Verhalten von ausgehärteten Epoxidharzzusammensetzungen besser untersuchen zu können wurde eine Labormethode zur Bewertung ihrer Toleranz gegenüber "$\Delta\alpha$ induzierter" Spannungen entwickelt.

Anstatt eine Spannung über eine thermische Längenausdehnung zu induzieren, welches Probekörper mit ähnlichen Dimensionen wie reale Karosserie-Bauteile benötigen würde, wurde bei der Labormethode die "$\Delta\alpha$ Spannung" über eine Zugprüfmaschine auf eine Zugscherprobe appliziert. Der Temperaturverlauf im Konvektionsofen wurde dabei von zwei Thermoelementen simuliert, die es ermöglichen, die Zugscherprobe im Bereich der Klebefläche mit definierter Aufheiz-und Abkühlraten zu temperieren. Da die Abkühlphase die kritischste ist, wurde bei dieser Prüfung nur während der Abkühlung eine Spannung über die Zugprüfmaschine appliziert. Je nach Einstellung der Zuggeschwindigkeit an der Zugprüfmaschine lassen sich so variable Spannungsfälle simulieren, die bei verschieden Substratkombinationen zustande kommen würden.

### Verwendete Prüfkörper und deren Präparation

Für die Simulation "$\Delta\alpha$ induzierter" Spannungen wurden Zugscherprüfkörper verwendet, die aus verzinktem Stahlblech (1.5mm Dicke, Streckgrenze 420MPa) folgendermassen hergestellt wurden:

### Präparation:

1.) Stahlblech (25mm x 100mm x 1.5mm) mit Heptan reinigen und anschliessend mit $3g/m^2$ Anticorit PL3802-39S (Tiefziehöl, FUCHS Schmierstoffe GmbH) definiert beölen.
2.) Klebefläche (10mm x 25mm) mit Teflon-Spacer (mit 0.5mm, 1.0 mm oder 1.5mm Dicke) begrenzen und Epoxidharzzusammensetzung applizieren.
3.) Bleche fügen und Klebefläche jeweils mit einer Klammer seitlich fixieren.
4.) Die Zugscherproben bei 180°C für 35min (Verweilzeit) temperieren um die Epoxidharzzusammensetzung auszuhärten.
5.) Nach Abkühlen der Proben wird der Teflon-Spacer entfernt.

Parameterbestimmung

Wie bereits erwähnt lassen sich bei dieser Prüfmethode verschiede $\Delta\alpha$ induzierte Spannungsfälle, über die Einstellung der Geschwindigkeit, mit der die Zugscherprobe gezogen wird, simulieren. Nachfolgend soll am Beispiel einer Materialkombination bestehend aus Aluminum um Stahl ($\Delta\alpha = 13 * 10^{-6} K^{-1}$), die notwendige Zuggeschwindigkeit, unter Berücksichtigung von Gleichungen (1) und (2), berechnet werden.
Wärmeausdehnung fester Körper in linearer Näherung

Gleichung (1) $$\Delta L = L_0 * \alpha * \Delta T$$

Gleichung (2) $$\Delta T = T_2 - T_1$$

Die Ausgangslänge $L_0$ beider Fügepartner soll 1000mm betragen. Entsprechend gängiger Temperaturverläufe in Konvektionsöfen wurde zur Aufheizung- bzw. Abkühlung der Proben, das in der Figur 1 gezeigte Temperatur Profil definiert. Daraus ergeben sich Start- und Endtemperatur $T_1/T_2$ sowie die Temperaturdifferenz $\Delta T$. Aufheiz-und Abkühlgeschwindigkeiten wurden ebenfalls Automobil-industrie üblich mit 40°C/min gewählt.

$$L_0 = 1000mm$$

$$\alpha_{Stahl} = 10.8 * 10^{-6}[K^{-1}]$$

$$\alpha_{Alu} = 23.8 * 10^{-6}[K^{-1}]$$

$$\Delta T = 165\ [K]$$

$$T_2 = 190[°C]$$

$$T_1 = 25\ [°C]$$

Gleichung (4)
$$\Delta L_{Stahl} = 1000mm * 10.8 * 10^{-6} K^{-1} * 165K = 1.782mm$$

Gleichung (5)
$$\Delta L_{Alu} = 1000mm * 23.8 * 10^{-6} K^{-1} * 165K = 3.927mm$$

Die Wärmeausdehnungskoeffizienten für Stahl $\alpha_{Stahl}$ und Aluminium $\alpha_{Alu}$ wurden der Literatur entnommen. Setzt man die definierten Werte in Gleichung 1 und 2 ein, erhält man die Wärmeausdehnung $\Delta L$ für Stahl und Aluminium

entsprechend Gleichung 4 und 5. Daraus resultiert während der Aufheizphase eine Längenausdehnungsdifferenz von 2.145mm, um die sich Aluminium starker als Stahl ausdehnt. Entsprechend muss die ausgehärtete Epoxidharzzusammensetzung, welcher eine stoffschlüssige Verbindung bildet, eine Schrumpfdifferenz von ebenfalls 2.145mm während der Abkühlphase kompensieren. Unter Berücksichtigung der Abkühlgeschwindigkeit $V_A$ von 40°C /min ergibt sich somit gemäss Gleichung 6 und 7 eine Zuggeschwindigkeit $V_{Zug}$ von 0.52mm /min.

Gleichung (6)

$$V_{Zug} = (\Delta L_{Alu} - \Delta L_{Stahl}) * \frac{V_A}{(T_2 - T_1)}$$

Gleichung (7)

$$V_{Zug} = (3.927mm - 1.782mm) * \frac{40\frac{°C}{min}}{(190°C - 25°C)} = 0.52mm/min$$

Durchführung einer Messung:

1.) Eine entsprechend der vorgehend beschriebenen Präparationsanleitung hergestellte Zugscherprobe wird in eine Zugprüfmaschine eingespannt. Vorerst wird allerdings nur die untere Klemmbacke fixiert. Die Einspannlänge beträgt 100mm.
2.) Beide Thermoelemente werden an die Probe gepresst, sodass sie in Kontakt mit der Klebefläche stehen.
3.) An der Steuereinheit wird Start- und Endtemperatur auf 25°C und 180°C, insbesondere 190°C, eingestellt. Für Aufheiz- und Abkühlgeschwindigkeiten wird 40°C/min eingegeben.
4.) Die Aufheizphase wird gestartet.
5.) Beim Erreichen der Endtemperatur von 180°C, insbesondere 190°C, wird diese mittels Countdown für 2min gehalten um eine gleichmässige Erwärmung der Klebefläche sicherzustellen.
6.) 30 Sekunden vor Ablauf des Countdown wird die Zugscherprobe nun auch durch die obere Klemmbacke fixiert.
7.) Mit Ablauf des Countdown wird automatisch die Abkühlphase gestartet. Zeitgleich wird manuell über die Steuersoftware der Zugprüfmaschine eine Zugscher-Prüfung mit einer Zuggeschwindigkeit von 0.52mm/min gestartet.

Messergebnisse und Auswertung

Als Messergebnis wird die Kraft gemessen, die nötig ist, um die Zugscherprobe bis zum Bruch zu deformieren, während sie von 180°C, insbesondere 190°C, auf 25°C abgekühlt wird. Pro Epoxidharzzusammensetzung wird eine Dreifach-bestimmung durchgeführt. Die Längenausdehnung Max. **Dehnung** wird anhand des zurückgelegten Traversenweges bestimmt. Zur Auswertung der Messung werden aus dem Messprotokoll die Mittelwerte der maximalen Längenausdehnung **Max. Dehnung** ($\varepsilon_M 2$) bei maximaler Kraft ($\sigma_M 2$) herangezogen.

Je höher die dabei erreichte maximale Längenausdehnung **Max. Dehnung,** desto " $\Delta\alpha$ toleranter" kann die Epoxidharzzusammensetzung betrachtet werden. Weiter ist es für eine "$\Delta\alpha$ tolerante" Epoxidharzzusammensetzung vorteilhaft, wenn eine geringe maximale Kraft aufgewendet werden muss. Besonders bevorzugt verfügen solche Epoxidharzzusammensetzung eine hohe maximale Längenausdehnung **Max. Dehnung** sowie eine geringe aufzuwendende maximale Kraft.

Weiter von Interesse ist der Versagenszeitpunkt. Passiert dies vor dem Ende der Abkühlphase, d.h. tritt ein Bruch beispielsweise bei einer Zuggeschwindigkeit $V_{Zug}$ von 0.40 mm /min vor Erreichen einer Längenausdehnung von 1.65mm, respektive bei einer Zuggeschwindigkeit $V_{Zug}$ von 0.52mm /min vor Erreichen einer Längenausdehnung von 2.145mm, auf, wird die "$\Delta\alpha$ Toleranz" der Epoxidharzzusammensetzung als nachteilig gewertet, da eine solche Epoxidharzzusammensetzung in einer realen Anwendung zu einem Bauteilversagen führen würde. Im Gegensatz dazu, falls der Bruch bei Dehnungen ≥1.65mm, respektive ≥2.145mm, auftritt, wird dies als bevorzugte "$\Delta\alpha$ Toleranz" angesehen. Je höher dabei die Längenausdehnung ausfällt umso besser ist die "$\Delta\alpha$ Toleranz".

Eine weitere interessante Grösse ist das Kraftniveau am Ende der Abkühlphase, d.h. bei Erreichen einer Längenausdehnung von 1.65mm, respektive 2.145mm. Je höher hier das Kraftniveau ist, desto mehr sind eingefrorenen Spannungen in der Epoxidharzzusammensetzung und irreversible Deformationen der Substrate zu erwarten. Entsprechend ist hier ein möglichst tiefes Kraftniveau ein vorteilhaftes Ergebnis.

Die maximale Längenausdehnung Max. Dehnung wird in einem Zugscherversuch während dem Abkühlen einer erwärmten ausgehärteten Zugscherprobe bestimmt.

Vorzugsweise wird die maximale Längenausdehnung Max. Dehnung in einem Zugscherversuch bei einer Zuggeschwindigkeit $V_{zug}$ von 0.52 mm/min, vorzugsweise 0.68 mm/min, gemessen.

Vorzugsweise wird die maximale Längenausdehnung Max. Dehnung als Längenausdehnung bei der maximalen im Zugscherversuch gemessenen Kraft (maximale Kraft) bestimmt.

Vorzugsweise wird die maximale Längenausdehnung Max. Dehnung im Zugscherversuch anhand des zurückgelegten Traversenweges bestimmt.

Vorzugsweise beträgt die Temperatur der Zugscherprobe des Zugscherversuchs bei Beginn der Messung 180°C, insbesondere 190°C, und bei Beginn der Messung wird die Zugscherprobe mit einer Abkühlgeschwindigkeit von 40°C/min auf eine Temperatur von 25°C gekühlt und danach bei dieser Temperatur belassen. Vorzugsweise wird die Zugscherprobe vor Beginn der Messung mit einer Aufheizgeschwindigkeiten wird 40°C/min auf eine Temperatur von 180°C, insbesondere 190°C, erwärmt.

Es handelt es sich bei dem Zugscherversuch um einen Zugscherversuch zur Bestimmung der Zugscherfestigkeit gemäss DIN EN 1465.

Vorzugsweise handelt es sich bei dem Zugscherversuch um einen Zugscherversuch mit Zugscherprüfkörpern, die folgende Merkmale aufweisen:

- Stahlbleche mit den Massen 25mm x 100mm x 1.5mm,
- Klebefläche der ausgehärteten einkomponentigen hitzehärtenden Epoxidharzzusammensetzung mit den Massen 10mm x 25mm mit einer Dicke von 1.5 mm, vorzugsweise 1.0 mm.

Die verwendeten Stahlbleche sind vorzugsweise aus feuerverzinktem Stahl. Weiter weisen diese vorzugsweise eine Streckgrenze von mindestens 420 MPa auf, um den Einfluss der Substratdeformation möglichst gering zu halten.

Die maximale Längenausdehnung **Max. Dehnung** wird vorzugsweise anhand des zurückgelegten Traversenweges bestimmt.

Vorzugsweise werden die Stahlbleche vor dem applizieren der einkomponentigen hitzehärtenden Epoxidharzzusammensetzung mit Heptan gereinigt und anschliessend mit 3g/$m^2$ mit einem Tiefziehöl, insbesondere Anticorit PL3802-39S, definiert beölt.

Vorzugsweise wird die einkomponentige hitzehärtende Epoxidharzzusammensetzung bei 180°C für 35min ausgehärtet.

Die Dicke der applizierten hitzehärtenden Epoxidharzzusammensetzung nach dem Schritt ii) beträgt ≥ 0.8 mm.

Vorzugsweise beträgt die Dicke ≥ 1 mm, ≥ 1.2 mm, vorzugsweise ≥ 1.5 mm, besonders bevorzugt 1.5 - 2.5 mm.

Die Dicke entspricht vorzugsweise dem durchschnittlichen Abstand der beiden hitzestabilen Substrate **S1** und **S2** in Kontaktbereich mit der hitzehärtenden Epoxidharzzusammensetzung.

Beträgt die Dicke weniger als 0.8 mm, so werden ungenügende Werte für die maximale Längenausdehnung erhalten. So ist beispielsweise in der Tabelle 10 ersichtlich, dass bei einer Zuggeschwindigkeit $V_{zug}$ von 0.52 mm/min sehr tiefe Werte für die maximale Längenausdehnung erhalten werden, wenn die Dicke 0.5 mm beträgt. Diese ist beispielsweise im Vergleich der Probenkörper mit einer Dicke von 0.5 mm mit den Probenkörpern mit einer Dicke von 1 mm, respektive 1.5 mm, ersichtlich.

Weiter ist aus der Tabelle 9 ersichtlich, dass bei einer Zuggeschwindigkeit $V_{zug}$ von 0.52 mm/min tiefe Werte für die maximale Längenausdehnung erhalten werden, wenn das Gewichtsverhältnis des mindestens einen Epoxidharz **A** mit durchschnittlich mehr als einer Epoxidgruppe pro Molekül zu dem mindestens einen Zähigkeitsverbesserer **D** mehr als 2.2 beträgt.

Beträgt die Zuggeschwindigkeit $V_{zug}$ 0.68 mm/min, sind ein Gewichtsverhältnis des mindestens einen Epoxidharz **A** mit durchschnittlich mehr als einer Epoxidgruppe pro Molekül zu dem mindestens einen Zähigkeitsverbesserer D von 0.3 - 0.6 notwendig, um Werte für die maximale Längenausdehnung **Max. Dehnung** von ≥ 2.8 mm zu erreichen.

Vorzugsweise beträgt die die maximalen Längenausdehnung Max. Dehnung ≥ 1.8 mm, vorzugsweise ≥ 2.0 mm, ≥ 2.145 mm, vorzugsweise ≥ 2.2 mm, vorzugsweise ≥ 2.5 mm, vorzugsweise ≥ 2.8 mm, vorzugsweise ≥ 3.0 mm, vorzugsweise ≥ 3.5 mm, vorzugsweise ≥ 4.0 mm.

Vorzugsweise beträgt die gemessene maximale Kraft ≤ 6000 N, vorzugsweise ≤ 5000 N, vorzugsweise ≤ 4500 N, vorzugsweise ≤ 4000 N, vorzugsweise ≤ 3500 N, vorzugsweise ≤ 3000 N, vorzugsweise ≤ 2500 N, vorzugsweise ≤ 2000 N.

Vorzugsweise beträgt die gemessene Kraft bei Erreichen der maximalen Längenausdehnung Max. Dehnung von ≥ 1.8 mm, vorzugsweise ≥ 2.0 mm, vorzugsweise 2.145 mm, ≤ 4000 N, vorzugsweise ≤ 3000 N, vorzugsweise ≤ 2500 N, vorzugsweise ≤ 2000 N, vorzugsweise ≤ 1500 N, vorzugsweise ≤ 1000 N, vorzugsweise ≤ 800 N, vorzugsweise ≤ 700 N.

Unter hitzestabilen Materialien **S1**, respektive **S2**, werden Materialien verstanden, welche bei einer Aushärtetemperatur von 100 - 220°C, vorzugsweise 120 - 200°C zumindest während der Aushärtezeit formstabil sind. Insbesondere handelt es sich hierbei um Metalle und Kunststoffe wie ABS, Polyamid, Epoxidharz, Polyesterharz, Polyphenylenether, faserverstärkte Kunststoffe wie Glasfaser- und Kohlefaserverstärkte Kunststoffe. Besonders bevorzugt als Kunststoffe sind faserverstärkte Kunststoffe. Bevorzugt ist zumindest ein Material ein Metall.

Als besonders bevorzugtes Verfahren gilt das Verkleben von hitzestabilen Substraten, insbesondere Metallen, mit unterschiedlichen thermischen Längenausdehnungskoeffizienten ($\Delta\alpha$) und/oder das Verkleben von Metallen mit faserverstärkten Kunststoffen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Besonders bevorzugt beträgt der Unterschied im thermischen Längenausdehnungskoeffizient ($\Delta\alpha$) zwischen dem hitzestabilen Material **S1** und dem hitzestabilen Material **S2** 10 - 25 * $10^{-6}$ [$K^{-1}$], insbesondere 10 - 15 * $10^{-6}$ [$K^{-1}$]

Vorzugsweise wird in dem Schritt iii) Erhitzen der Zusammensetzung auf eine Temperatur von 100 - 220°C, insbesondere von 120 - 200°C, bevorzugt zwischen 140 und 200°C besonders bevorzugt zwischen 150 und 190°C, die Zusammensetzung für 5 min - 6 h, 10 min - 2 h, 10 min - 60 min, 10 min - 30 min, besonders bevorzugt 10 min - 20 min, bei der vorgenannten Temperatur belassen.

Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxidharze weisen die Formel (II) auf

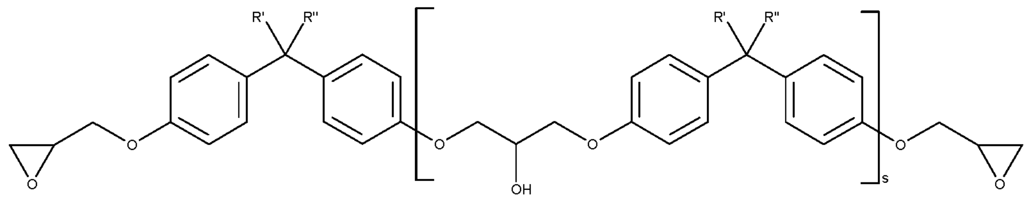
(II)

Hierbei stehen die Substituenten R' und R" unabhängig voneinander entweder für H oder $CH_3$.

Bei Epoxid-Festharzen steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (II) mit einem Index s von 1 bis 1.5 werden vom Fachmann als Semisolid-Epoxidharze bezeichnet. Für die hier vorliegende Erfindung werden sie ebenfalls als Festharze betrachtet. Bevorzugt als Epoxid-Festharze sind jedoch Epoxidharze im engeren Sinn, d.h. wo der Index s einen Wert von > 1.5 aufweist.

Bei Epoxid-Flüssigharze steht der Index s für einen Wert von kleiner als 1. Bevorzugt steht s für einen Wert von kleiner als 0.2.

Es handelt sich somit vorzugsweise um Diglycidylether von Bisphenol-A (DGEBA), von Bisphenol-F sowie von Bisphenol-A/F. Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Weiterhin geeignet als Epoxidharz **A** sind sogenannte Epoxid-Novolake. Diese weisen insbesondere die folgende Formel auf:

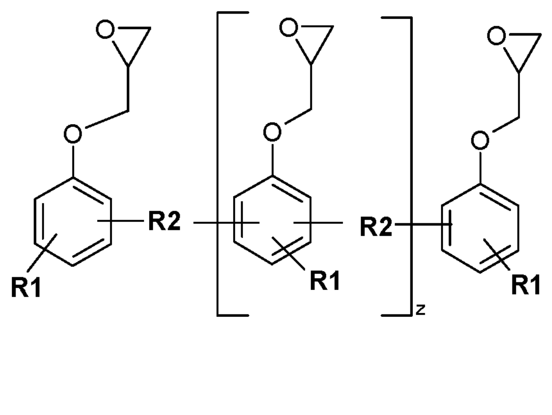

mit **R2=**

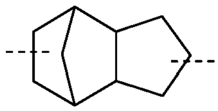

oder $CH_2$, **R1** = H oder Methyl und z = 0 bis 7.

Insbesondere handelt es sich hierbei um Phenol- oder Kresol-Epoxid-Novolake **(R2** = $CH_2$).

Solche Epoxidharze sind unter dem Handelnamen EPN oder ECN sowie Tactix® von Huntsman oder unter der Produktereihe D.E.N.™ von Dow Chemical kommerziell erhältlich.

Bevorzugt stellt das Epoxidharz **A** ein Epoxid-Flüssigharz der Formel (II) dar.

In einer besonders bevorzugten Ausführungsform enthält die hitzehärtende Epoxidharzzusammensetzung sowohl mindestens ein Epoxid-Flüssigharz der Formel (II) mit s < 1, insbesondere kleiner als 0.2, als auch mindestens ein Epoxid-Festharz der Formel (II) mit s > 1.5, insbesondere von 2 bis 12.

Der Anteil von Epoxidharzes **A** beträgt vorzugsweise 10 - 60 Gew.-%, insbesondere 30 - 50 Gew.-%, bezogen auf das Gesamtgewicht der Epoxidharzzusammensetzung.

Weiter ist es vorteilhaft, wenn es sich bei 60-100 Gew.-%, insbesondere 60-80 Gew.-%, des Epoxidharzes **A** um ein vorgenanntes Epoxid-Flüssigharz handelt.

Weiter ist es vorteilhaft, wenn es sich bei 0-40 Gew.-%, insbesondere 20-40 Gew.-%, des Epoxidharzes **A** um ein vorgenanntes Epoxid-Festharz handelt.

Die hitzehärtende Epoxidharzzusammensetzung enthält mindestens einen latenten Härter **B** für Epoxidharze. Dieser wird durch erhöhte Temperatur aktiviert, vorzugsweise bei Temperaturen von 70°C oder mehr.

Es handelt sich hierbei vorzugsweise um einen Härter, welcher ausgewählt ist aus der Gruppe bestehend aus Dicyandiamid; Guanidine; Anhydride von mehrwertigen Carbonsäuren; Dihydrazide und Aminoguanidine.

Besonders bevorzugt ist der Härter **B** Dicyandiamid.

Die Menge des latenten Härter **B** für Epoxidharze, beträgt vorteilhaft 0.1 - 30 Gew.-%, insbesondere 0.2 - 10 Gew.-%, bevorzugt 1 - 10 Gew.-%, insbesondere bevorzugt 5 - 10 Gew.-%, bezogen auf das Gewicht des Epoxidharzes **A.**

Vorzugsweise enthält die hitzehärtende Epoxidharzzusammensetzung zusätzlich mindestens einen Beschleuniger **C** für Epoxidharze. Solche beschleunigend wirksame Härter sind vorzugsweise substituierte Harnstoffe, wie beispielsweise 3-(3-Chlor-4-methylphenyl)-1,1-dimethylharnstoff (Chlortoluron) oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole, wie 2-Isopropylimidazol oder 2-Hydroxy-N-(2-(2-(2-hydroxyphenyl)-4,5-dihydroimidazol-1-yl)ethyl)benzamid, Imidazoline und Amin-Komplexe eingesetzt werden.

Vorzugsweise ist der Beschleuniger **C** für Epoxidharze ausgewählt aus der Liste bestehend aus substituierten Harnstoffen, Imidazolen, Imidazolinen und Amin-Komplexen.

Besonders bevorzugt ist der Beschleuniger **C** für Epoxidharze ausgewählt aus der Liste bestehend aus substituierten Harnstoffen und Amin-Komplexen, insbesondere wenn es sich bei dem latenten Härter **B** um ein Guanidin, insbesondere Dicyandiamid, handelt.

Die einkomponentige hitzehärtende Epoxidharzzusammensetzung enthält mindestens einen Zähigkeitsverbesserer **D.** Die Zähigkeitsverbesserer **D** können fest oder flüssig sein.

Es handelt sich bei dem Zähigkeitsverbesserer **D** um ein endständig blockiertes Polyurethanpolymer der Formel (I).

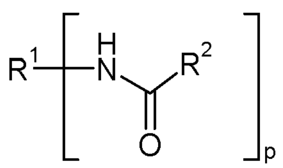 (I)

Hierbei steht $R^1$ für einen p-wertigen Rest eines mit Isocyanatgruppen terminierten linearen oder verzweigten Polyurethanprepolymers nach dem Entfernen der endständigen Isocyanatgruppen und p für einen Wert von 2 bis 8.

Weiter steht $R^2$ für eine Blockierungsgruppe, welche sich bei einer Temperatur über 100°C abspaltet, wobei $R^2$ nicht für einen Substituenten, welcher ausgewählt ist aus der

Gruppe bestehend aus

| | |
|---|---|
| 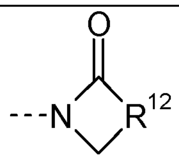 und | 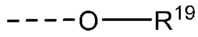 , |

wobei

$R^{12}$ für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe, insbesondere für ε-Caprolactam nach Entfernung des NH-Protons steht; und

$R^{19}$ für Bisphenole, nach Entfernung einer Hydroxylgruppe, insbesondere Bis-Phenol-A, Bis-Phenol-F und 2,2'-Diallyl-bisphenol-A, besonders bevorzugt Bis-Phenol-A und Bis-Phenol-F, steht. Unter dem Begriff "Bisphenole" werden in diesem Zusammenhang vorzugsweise Verbindungen, welche als gemeinsames Strukturmerkmal zwei über ein Kohlenstoff-Atom verknüpfte Phenol-Ringe enthalten, verstanden.

Überraschenderweise wurde gefunden, dass durch die vorgenannten Substituenten

| | |
|---|---|
| 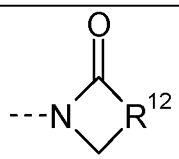 und | 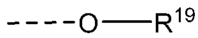 |

unzureichende Werte für die maximale Längenausdehnung **Max. Dehnung** erhalten werden. Dies ist beispielsweise im Vergleich der Beispiele 8 und 9 in Tabelle 4 mit den Beispielen in Tabelle 3 ersichtlich.

Es steht $R^2$ für eine Blockierungsgruppe, welche sich bei einer Temperatur über 100°C abspaltet, wobei $R^2$ unabhängig voneinander für einen Substituenten, welcher ausgewählt ist aus der Gruppe bestehend aus

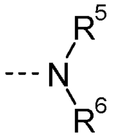 , 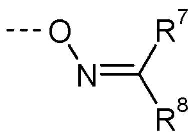 , 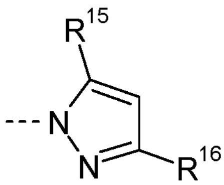 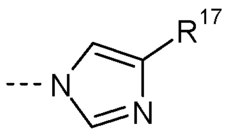 ,

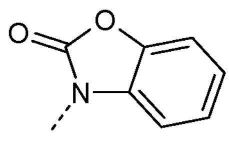

und

---O-$R^{18}$,

insbesondere

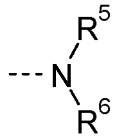 , 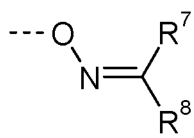 , 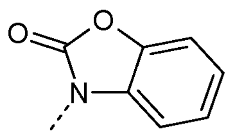

und

---O-$R^{18}$,

vorzugsweise

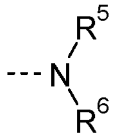, 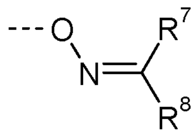,

und

---O-$R^{18}$,

besonders bevorzugt

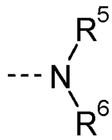

---O-$R^{18}$

und
am meisten bevorzugt für

---O-$R^{18}$

wobei

$R^5$, $R^6$, $R^7$ und $R^8$ je unabhängig voneinander für eine Alkyl- oder Cycloalkyl- oder Aralkyl- oder Arylalkyl-Gruppe steht

oder $R^5$ zusammen mit $R^6$, oder $R^7$ zusammen mit $R^8$, einen Teil eines 4-bis 7-gliedrigen Rings bilden, welcher gegebenenfalls substituiert ist;

$R^{15}$, $R^{16}$ und $R^{17}$ je unabhängig voneinander für H oder für eine Alkylgruppe oder für eine Arylgruppe oder eine Aralkylgruppe stehen; und

$R^{18}$ für eine Aralkylgruppe mit einer substituierten oder unsubstituierten Aromatengruppe oder für eine einkernige substituierte oder unsubstituierte Aromatengruppe steht, welche gegebenenfalls aromatische Hydroxylgruppen aufweist.

Überraschenderweise wurde gefunden dass dadurch höhere Werte für das E-modul, die Zugfestigkeit, die Bruchdehnung, die Zugscherfestigkeit, der Winkelschälfestigkeit sowie der Schlagschälfestigkeit erhalten werden. Dies ist beispielsweise in Tabelle 3 im Vergleich der Beispiele 1-7 ersichtlich.

Als $R^{18}$ sind insbesondere Phenole nach Entfernung einer Hydroxylgruppe zu betrachten. Bevorzugte Bespiele für derartige Phenole sind insbesondere ausgewählt aus der Liste bestehend aus Phenol, Kresol, 4-Methoxyphenol (HQMME), Resorcinol, Brenzkatechin, Cardanol (3-Pentadecenylphenol (aus Cashewnuss-Schalen-Öl)) und Nonylphenol.

Als $R^{18}$ sind andererseits insbesondere Hydroxybenzylalkohol und Benzylalkohol nach Entfernung einer Hydroxylgruppe zu betrachten.

Als Substituent der Formel ---O-$R^{18}$ sind Monophenole nach Entfernung eines phenolischen Wasserstoffatoms bevorzugt. Besonders bevorzugte Bespiele für derartigen Reste $R^2$ sind Reste, welche ausgewählt sind aus der Gruppe bestehend aus

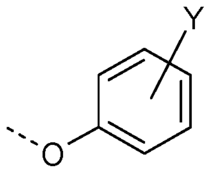, 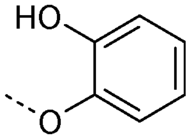, 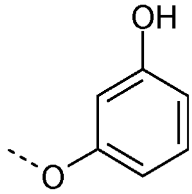, 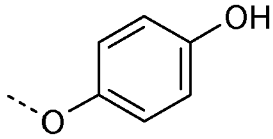,

und

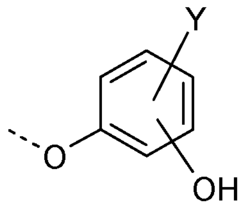,

bevorzugt

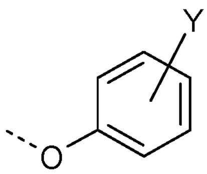.

Der Rest Y steht hierbei für einen gesättigten, aromatischen oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl, Phenyl, Alkylether, insbesondere Methyether, Carbonsäureester oder ein ungesättigter $C_{15}$-Alkylrest mit 1 bis 3 Doppelbindungen bevorzugt. Am meisten bevorzugt ist Y ausgewählt aus der Gruppe bestehend aus Alkylether, insbesondere Methyether, und ungesättigter $C_{15}$-Alkylrest mit 1 bis 3 Doppelbindungen.

Besonders bevorzugt handelt es sich um ein $R^{18}$ um Phenole nach Entfernung einer Hydroxylgruppe, besonders bevorzugte Bespiele für derartige Phenole sind ausgewählt aus der Liste bestehend aus 4-Methoxyphenol (HQMME) und Cardanol (3-Pentadecenylphenol (aus Cashewnuss-Scha!en-Ö!)).

Falls $R^5$, $R^6$, $R^7$, $R^8$, $R^9$, $R^{9'}$, $R^{10}$, $R^{11}$, $R^{15}$, $R^{16}$ oder $R^{17}$ für eine Alkylgruppe steht, ist diese insbesondere eine lineare oder verzweigte $C_1$-$C_{20}$-Alkylgruppe.

Falls $R^5$, $R^6$, $R^7$, $R^8$, $R^9$, $R^{9'}$, $R^{10}$, $R^{15}$, $R^{16}$ oder $R^{17}$ für eine Aralkylgruppe steht, ist diese Gruppierung insbesondere eine über Methylen gebundene aromatische Gruppe, insbesondere eine Benzylgruppe.

Falls $R^5$, $R^6$, $R^7$, $R^8$, $R^9$, $R^{9'}$ oder $R^{10}$ für eine Alkylarylgruppe steht, ist diese insbesondere eine über Phenylen gebundene $C_1$- bis $C_{20}$-Alkylgruppe, wie beispielsweise Tolyl oder Xylyl.

Die Herstellung des endständig blockierten Polyurethanprepolymers der Formel (I) erfolgt aus dem Isocyanatgruppen terminierten linearen oder verzweigten Polyurethanprepolymer mit einer oder mehreren Isocyanat-reaktiven Verbindungen $R^2H$. Falls mehrere derartige Isocyanat-reaktive Verbindungen eingesetzt werden, kann die Reaktion sequentiell oder mit einer Mischung dieser Verbindungen erfolgen.

Das Polyurethanprepolymer mit Isocyanat-Endgruppen, auf dem $R^1$ basiert, lässt sich insbesondere aus mindestens einem Diisocyanat oder Triisocyanat sowie aus einem Polymeren $\mathbf{Q_{PM}}$ mit endständigen Amino-, Thiol- oder Hydroxylgruppen herstellen.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat ($H_{12}$MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate. Selbstverständlich können auch geeignete Mischungen von Di- oder Triisocyanaten eingesetzt werden.

Als Polymere $\mathbf{Q}_{PM}$ mit endständigen Amino-, Thiol- oder Hydroxylgruppen sind insbesondere geeignet Polymere $\mathbf{Q}_{PM}$ mit zwei oder drei endständigen Amino-, Thiol- oder Hydroxylgruppen.

Die Polymere $\mathbf{Q}_{PM}$ weisen vorteilhaft ein Equivalenzgewicht von 300 - 6000, insbesondere von 600 - 4000, bevorzugt von 700 - 2200 g/Equivalent NCOreaktiver Gruppen auf.

Als Polymere $\mathbf{Q}_{PM}$ bevorzugt sind Polyole mit mittleren Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, Polytetramethylenetherglycolen, hydroxylterminierten Polybutadienen, hydroxylterminierten Butadien-Acrylnitril-Copolymeren sowie deren Gemische, insbesondere bevorzugt sind Polytetramethylenetherglycole und hydroxylterminierte Polybutadiene.

Es können ein oder mehrere Polytetramethylenetherglycole eingesetzt werden. Polytetramethylenetherglycol wird auch als Polytetrahydrofuran oder PTMEG bezeichnet. PTMEG kann z.B. durch Polymerisation von Tetrahydrofuran, z.B. über saure Katalyse, hergestellt werden. Die Polytetramethylenetherglycole sind insbesondere Diole.

Polytetramethylenetherglycole sind im Handel erhältlich, z. B. die PolyTHF®-Produkte von BASF wie PolyTHF®2000, PolyTHF®2500 CO oder PolyTHF®3000 CO, die Terathane®-Produkte von Invista B.V oder die Polymeg® Produkte von LyondellBasell.

Die OH-Funktionalität des eingesetzten Polytetramethylenetherglycols liegt bevorzugt im Bereich von etwa 2, z.B. im Bereich von 1,9 bis 2,1. Dies ist durch die kationische Polymerisation des Ausgangsmonomeren Tetrahydrofuran gegeben.

Vorteilhaft sind Polytetramethylenetherglycole mit OH-Zahlen zwischen 170 mg/KOH g bis 35 mg KOH/g, bevorzugt im Bereich von 100 mg KOH/g bis 40 mg KOH/g, und ganz besonders bevorzugt 70 bis 50 mg KOH/g. Sofern nicht anders angegeben, wird in der vorliegenden Anmeldung die OH-Zahl titrimetrisch gemäß DIN 53240 bestimmt. Hierbei wird die Hydroxylzahl durch Acetylierung mit Essigsäureanhydrid und nachfolgender Titration des überschüssigen Essigsäureanhydrids mit alkoholischer Kalilauge bestimmt.

Mit Kenntnis der Difunktionalität können aus den titrimetrisch ermittelten Hydroxylzahlen die OH-Äquivalentgewichte beziehungsweise das mittlere Molekulargewicht des eingesetzten Polytetramethylenetherglycols bestimmt werden.

Vorteilhaft in der vorliegenden Erfindung eingesetzte Polytetramethylenetherglycole weisen bevorzugt ein mittleres Molekulargewicht im Bereich von 600 bis 5000 g/mol, bevorzugter 1000 bis 3000 g/mol und besonders bevorzugt im Bereich von 1.500 bis 2.500 g/mol, insbesondere etwa 2000 g/mol, auf.

Es können ein oder mehrere Hydroxy-terminiertes Polybutadiene eingesetzt werden. Es können auch Mischungen von zwei oder mehr Hydroxy-terminierten Polybutadienen eingesetzt werden.

Geeignete Hydroxy-terminierten Polybutadiene sind insbesondere solche, die durch radikalische Polymerisation von 1,3-Butadien hergestellt werden, wobei z.B. ein Azonitril oder Wasserstoffperoxid als Initiator verwendet wird. Hydroxy-terminierte Polybutadiene sind im Handel erhältlich, z.B. die Poly bd®- Produkte von Cray Valley wie Poly bd® R45V, Polyvest®HT von Evonik sowie Hypro®2800X95HTB von Emerald Performance Materials LLC.

Das Hydroxy-terminierte Polybutadien weist bevorzugt ein mittleres Molekulargewichts von weniger als 5.000, auf, bevorzugt im Bereich von 2000 bis 4000 g/mol. Die OH-Funktionalität des Hydroxy-terminierten Polybutadiens liegt bevorzugt im Bereich von 1,7 bis 2,8, bevorzugt von 2,4 bis 2,8.

Weiter bevorzugt sind Hydroxy-terminierte Polybutadiene mit einem Acrylnitril-Anteil von weniger als 15 %, vorzugsweise weniger als 5 % insbesondere bevorzugt weniger als 1 %, insbesondere bevorzugt von weniger als 0.1 %. Am meisten bevorzugt sind Hydroxy-terminierte Polybutadiene frei von Acrylnitril.

Bezogen auf das Gesamtgewicht der zur Herstellung des Isocyanat-terminierten Polymers eingesetzten Polyole beträgt der Gesamtanteil an Polytetramethylenetherglycol und Hydroxy-terminiertem Polybutadien vorzugsweise mindestens 95 Gew.-% und bevorzugt mindestens 98 Gew.-%. In einer bevorzugten Ausführungsform werden nur Polytetramethylenetherglycol und/oder Hydroxy-terminiertes Polybutadien als Polyole eingesetzt.

Das Gewichtsverhältnis von Polytetramethylenetherglycol zu Hydroxy-terminierten Polybutadien liegt bevorzugt im Bereich von 100/0 bis 70/30, bevorzugter von 100/0 bis 60/40, bevorzugter von 100/0 bis 90/10 und ganz besonders bevorzugt bei 100/0.

Dies ist dahingehend von Vorteil, dass dadurch höhere Werte für das E-modul, die Zugfestigkeit, die Bruchdehnung, die Zugscherfestigkeit, der Winkelschälfestigkeit sowie der Schlagschälfestigkeit erhalten werden. Dies ist beispielsweise im Vergleich der Beispiele 2 und 3 in Tabelle 3 ersichtlich.

In einer bevorzugten Ausführungsform wird das Polyurethanprepolymer aus mindestens einem Diisocyanat oder Triisocyanat sowie aus einem Polymeren $\mathbf{Q}_{PM}$ mit endständigen Amino-, Thiol- oder Hydroxylgruppen hergestellt. Die Herstellung des Polyurethanprepolymers erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren $\mathbf{Q}_{PM}$ eingesetzt wird.

Das Polyurethanprepolymer mit Isocyanatendgruppen weist bevorzugt elastischen Charakter auf. Es zeigt bevorzugt eine Glasumwandlungstemperatur Tg von kleiner als 0°C.

Das Gewichtsverhältnis des mindestens einen Epoxidharz **A** mit durchschnittlich mehr als einer Epoxidgruppe pro Molekül zu dem mindestens einen Zähigkeitsverbesserer **D** beträgt von 0.3 - 2.2.

Ein Gewichtsverhältnis von weniger als 0.3 sind dahingehend von Nachteil, dass dadurch die Zusammensetzungen sehr langsam oder gar nicht aushärten. Weiter werden insbesondere tiefe Werte in E-modul, Zugfestigkeit und Winkelschälfestigkeit erhalten.

Ein Gewichtsverhältnis von mehr als 2.2 sind dahingehend von Nachteil, dass dadurch die Zusammensetzungen erhalten werden, welche geringe Werte für die Schlagschälfestigkeit sowie die maximale Längenausdehnung aufweisen.

Dies ist beispielsweise in der Tabelle 6 ersichtlich.

Vorzugsweise beträgt das Gewichtsverhältnis des mindestens einen Epoxidharz **A** mit durchschnittlich mehr als einer Epoxidgruppe pro Molekül zu dem mindestens einen Zähigkeitsverbesserer **D** von 0.4 - 2.0, besonderes bevorzugt 0.5 - 1.8, am meisten bevorzugt 0.6 - 1.4. Dies ist dahingehend von Vorteil, dass dadurch die Zusammensetzungen hohe Werte für Winkelschälfestigkeit und Schlagschälfestigkeit aufweisen.

Weiter kann es vorteilhaft sein, wenn das Gewichtsverhältnis von 0.3 - 2.2, insbesondere 0.4 - 2.2, 0.6 - 2.2, 1.0 - 2.2, 1.4 - 2.2, bevorzugt 1.8 - 2.2 beträgt. Dies ist dahingehend von Vorteil, dass dadurch die Zusammensetzungen hohe Werte für E-modul und Zugfestigkeit aufweisen.

Beträgt das Gewichtsverhältnis von 0.4 - 2.0, insbesondere 0.4 - 1.8, bevorzugt 0.4 - 1.4, besonders bevorzugt 0.4 - 1.0, ist dies dahingehend von Vorteil, dass dadurch die Zusammensetzungen hohe Werte für die Schlagschälfestigkeit bei -30°C aufweisen, wenn $R^2$ ausgewählt ist aus der Gruppe bestehend aus

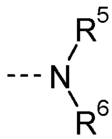
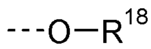

und
am meisten
bevorzugt 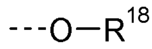 .

Weiter kann es vorteilhaft sein, wenn das Gewichtsverhältnis von 0.3 - 2.0, insbesondere 0.3 - 1.8, 0.3 - 1.4, 0.3 - 1.0, 0.3 - 0.6, bevorzugt 0.3 - 0.4, beträgt. Dadurch werden Zusammensetzungen mit hohen Werten für die maximale Längenausdehnung **Max. Dehnung** und die maximale Kraft erhalten.

In einer weiteren bevorzugten Ausführungsform enthält die Zusammensetzung zusätzlich mindestens einen Füllstoff F. Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente.

Vorteilhaft beträgt der Gesamtanteil des gesamten Füllstoffs F 5 - 40 Gewichts-%, vorzugsweise 10 - 30 Gewichts-%, bezogen auf das Gesamtgewicht der Epoxidharzzusammensetzung.

In einer weiteren Ausführungsform kann die Zusammensetzung ein physikalisches oder chemisches Treibmittel enthalten, wie es beispielsweise unter dem Handelsnamen Expancel™ der Firma Akzo Nobel oder Celogen™ der Firma Chemtura oder unter dem Handelsnamen Luvopor® von Lehmann & Voss erhältlich ist. Der Anteil des Treibmittels beträgt typischerweise 0.1 - 3 Gew.-%, bezogen auf Gesamtgewicht der Epoxidharzzusammensetzung. Vorzugsweise weist die Zusammensetzung weniger als 1 Gew.-%, bevorzugt weniger als 0.5 Gew.-%, besonders bevorzugt weniger als 0.3 Gew.-%, am meisten bevorzugt weniger als 0.1 Gew.-%, an physikalisches oder chemisches Treibmittel auf, bezogen auf das Gesamtgewicht der Epoxidharzzusammensetzung.

In einer weiteren bevorzugten Ausführungsform enthält die Zusammensetzung zusätzlich mindestens einen Epoxidgruppen-tragenden Reaktivverdünner **G.** Solche Reaktivverdünner sind dem Fachmann bekannt. Bevorzugte Beispiele für Epoxidgruppen-tragende Reaktivverdünner sind:

- Glycidylether von monofunktionellen gesättigten oder ungesättigten, verzweigten oder unverzweigten, zyklischen oder offenkettigen $C_4$ - $C_{30}$ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen $C_2$ - $C_{30}$ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.

- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-tert.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der Epoxidharzzusammensetzung.

Die Zusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll® bzw. Dellatol BBS von Bayer kommerziell erhältlich sind.

Als Stabilisatoren eignen sich insbesondere gegebenenfalls substituierte Phenole, wie BHT oder Wingstay® T (Elikem), sterisch gehinderte Amine oder N-Oxylverbindungen wie TEMPO (Evonik).

Eine besonders bevorzugte einkomponentige Epoxidharzzusammensetzung umfasst:

- 10 - 60 Gew.-%, insbesondere 20 - 40 Gew.-%, bezogen auf das Gesamtgewicht der Epoxidharzzusammensetzung, Epoxidharz A mit durchschnittlich mehr als einer Epoxidgruppe pro Molekül; vorzugsweise handelt es sich bei 60-100 Gew.-%, insbesondere 60-80 Gew.-%, des Epoxidharzes **A** um ein Epoxid-Flüssigharz und bei 0-40 Gew.-%, insbesondere 20-40 Gew.-%, des Epoxidharzes **A** um ein Epoxid-Festharz;.
- mindestens einen latenten Härter für Epoxidharze **B**, vorzugsweise ausgewählt aus Dicyandiamid, Guanidinen, Anhydriden von mehrwertigen Carbonsäuren, Dihydraziden, und Aminoguanidinen, sowie deren Derivaten, wobei Dicyandiamid bevorzugt ist;
- vorzugsweise mindestens einen Beschleuniger **C**, ausgewählt aus der Liste bestehend aus substituierten Harnstoffen, Imidazolen, Imidazolinen und Amin-Komplexen, insbesondere ausgewählt ist aus der Liste bestehend aus substituierten Harnstoffen und Amin-Komplexen, insbesondere bevorzugt substituierten Harnstoffen;
- mindestens einen vorgenannten Zähigkeitsverbesserer **D**, wobei jene bevorzugt sind, welche vorgehend als bevorzugte Zähigkeitsverbesserer **D** beschrieben wurden, vorzugsweise beträgt dabei der Anteil an Zähigkeitsverbesserer **D** 20 -60 Gew.-%, 25 -55 Gew.-%, 30 -50 Gew.-%, besonders bevorzugt 30 -40 Gew.-%, bezogen auf das Gesamtgewicht der Epoxidharzzusammensetzung;
- vorzugsweise 5 - 40 Gewichts-%, vorzugsweise 10 - 30 Gewichts-%, bezogen auf das Gesamtgewicht der Epoxidharzzusammensetzung, von einem Füllstoffe **F** ausgewählt vorzugsweise aus der Gruppe bestehend aus Wollastonit, Calciumcarbonat, Calciumoxid, Farbpigmenten, insbesondere Russ, und pyrogene Kieselsäuren, insbesondere Calciumcarbonat, Calciumoxid und pyrogene Kieselsäuren;
- vorzugsweise 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der Epoxidharzzusammensetzung, von einen Epoxidgruppen-tragenden Reaktivverdünner **G**;
- wobei

  - das Gewichtsverhältnis des mindestens einen Epoxidharz **A** mit durchschnittlich mehr als einer Epoxidgruppe pro Molekül zu dem mindestens einen Zähigkeitsverbesserer **D** von 0.3 - 2.2, 0.4 - 2.0, besonderes bevorzugt 1.0 - 1.8, beträgt.

Weiter kann es vorteilhaft sein, wenn die bevorzugte einkomponentige Epoxidharzzusammensetzung zu mehr als 80 Gewichts-%, vorzugsweise mehr als 90 Gewichts-%, insbesondere mehr als 95 Gewichts-%, insbesondere bevorzugt mehr als 98 Gewichts-%, am meisten bevorzugt mehr als 99 Gewichts-%, bezogen auf das Gesamtgewicht der Epoxidharzzusammensetzung, aus den vorgenannten Bestandteilen besteht.

Ein Beispiel einer besonders bevorzugten Zusammensetzung ist beispielsweise Beispiel 13 in Tabelle 5.

Es ist vorteilhaft, wenn die erfindungsgemässe Epoxidharzzusammensetzung eine Viskosität bei 25°C von 100 - 10000 Pa*s, insbesondere 500 - 5000 Pa*s, vorzugsweise 1000 - 3000 Pa*s, aufweist. Dies ist dahingehend von

Vorteil, dass dadurch eine gute Applizierbarkeit gewährleistet ist. Vorzugsweise wird die Viskosität gemessen wie in dem Beispielteil beschrieben.

Besonders bevorzugt handelt es sich um hitzehärtende Epoxidharzzusammensetzungen, welche im ausgehärteten Zustand:

- eine Zugscherfestigkeit, insbesondere gemessen nach DIN EN 1465, besonders bevorzugt wie in dem Beispielteil beschrieben, von mehr als 10 MPa, mehr als 15 MPa, mehr als 20 MPa, aufweisen, und/oder
- eine Zugfestigkeit, insbesondere gemessen nach DIN EN ISO 527, besonders bevorzugt wie in dem Beispielteil beschrieben, von mehr als 10 MPa, mehr als 15 MPa, mehr als 20 MPa, aufweisen, und/oder
- eine Bruchdehnung, insbesondere gemessen nach DIN EN ISO 527, besonders bevorzugt wie in dem Beispielteil beschrieben, von mehr als 10%, mehr als 20%, mehr als 30%, insbesondere 30 - 200 %, besonders bevorzugt 30 - 150 %, aufweisen, und/oder
- ein E-Modul insbesondere gemessen nach DIN EN ISO 527, besonders bevorzugt wie in dem Beispielteil beschrieben, von 300 - 1000 MPa, insbesondere von 500 - 800 MPa, aufweisen.
- eine Schlagschälfestigkeit, insbesondere gemessen nach ISO 11343, besonders bevorzugt wie in dem Beispielteil beschrieben, von mehr als 30 N/mm, mehr als 40 N/mm, mehr als 60 N/mm bei 23°C, aufweisen, und/oder
- eine Winkelschälfestigkeit, insbesondere gemessen nach DIN 53281, besonders bevorzugt wie in dem Beispielteil beschrieben, von mehr als 5 N/mm, mehr als 8 N/mm, mehr als 10 N/mm, aufweisen.

Es hat sich gezeigt, dass sich die beschriebenen hitzehärtenden Epoxidharzzusammensetzungen besonders zur Verwendung als einkomponentige hitzehärtende Klebstoffe, insbesondere als hitzehärtender einkomponentiger Klebstoff im Fahrzeugbau und Sandwichpanelbau, eignen. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit, sowohl bei höheren Temperaturen und bei tiefen Temperaturen auszeichnen. Solche Klebstoffe werden für das Verkleben von hitzestabilen Materialien benötigt.

Ein solcher Klebstoff wird insbesondere zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 130 - 220°C, vorzugsweise 130 - 200°C, besonders bevorzugt 140 - 190°C.

Aus einem derartigen vorgehend genannten Verfahren resultiert ein verklebter Artikel. Ein derartiger Artikel ist vorzugsweise ein Fahrzeug oder ein Teil eines Fahrzeugs.

Einen weiteren Aspekt der vorliegenden Erfindung betrifft daher ein verklebter Artikel erhalten aus dem vorgenannten Verfahren. Selbstverständlich können mit einer vorgenannten Zusammensetzung neben hitzehärtenden Klebstoffen auch Dichtmassen realisiert werden. Ferner eignet sich das erfindungsgemässe Verfahren nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer vorgenannten Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

## Beispiele

Im Folgenden werden einige Beispiele aufgeführt, welche die Erfindung weiter veranschaulichen.

### Bestimmung des Isocyanatgehaltes

Der Isocyanatgehalt wurde in Gew.-% mittels einer Rücktitration mit im Überschuss eingesetztem Di-n-butylamin und 0,1 M Salzsäure bestimmt. Alle Bestimmungen wurden halbmanuell auf einem Mettler-Toledo Titrator des Typs DL50 Graphix mit automatischer potentiometrischer Endpunktbestimmung durchgeführt. Dazu wurden jeweils 600-800 mg der zu bestimmenden Probe unter Erwärmen in einer Mischung aus 10 ml Isopropanol und 40 ml Xylol gelöst und anschließend mit einer Lösung von Dibutylamin in Xylol umgesetzt. Überschüssiges Di-n-butylamin wurde mit 0,1M Salzsäure titriert und daraus der Isocyanatgehalt berechnet.

### Maximale Längenausdehnung (Max. Dehnung) und maximale Kraft (Max. Kraft)

Die maximale Längenausdehnung (Max. Dehnung) und die maximale Kraft (Max. Kraft) wurden wie vorgehend unter "Beschreibung Messmethode für maximale Längenausdehnung (Max. Dehnung) und maximale Kraft" beschrieben bestimmt. Pro Epoxidharzzusammensetzung wurde eine Dreifach-Bestimmung durchgeführt. Die maximale Längenausdehnung **Max. Dehnung** wurde anhand des zurückgelegten Traversenweges bestimmt. Zur Auswertung der Messung wurden aus dem Messprotokoll die Mittelwerte der maximalen Längenausdehnung **Max. Dehnung** ($\varepsilon_M 2$) bei maximaler Kraft ($\sigma_M 2$) herangezogen.

Für die Zusammensetzungen 1 - 24 wurde eine Dicke der Klebefläche von 1.5 mm verwendet. Es wurde eine Zuggeschwindigkeit $V_{zug}$ von 0.52 mm/min sowie eine Temperatur bei Beginn der Messung von 190°C ($\Delta T$ = 165 [K]) verwendet.

Die Dicke der Klebefläche sowie die verwendete Zuggeschwindigkeit $V_{zug}$ von den Zusammensetzungen 25 - 27 sind in den Tabellen 9 und 10 ausgewiesen. Weiter betrug bei Beginn der Messung des Zugscherversuchs der Zusammensetzungen 25 - 27 die Temperatur bei Beginn der Messung 180°C anstelle von 190 °C, es wurde daher ein $\Delta T$ = 155 [K] anstelle von $\Delta T$ = 165 [K] verwendet, alle anderen Messparameter entsprechen den Messparametern, wie sie vorgehend unter "Beschreibung Messmethode für maximale Längenausdehnung (Max. Dehnung) und maximale Kraft" beschrieben wurden. Die Zusammensetzung 25 entspricht in ihren Bestandteilen der Zusammensetzung 10, die Zusammensetzung 26 entspricht in ihren Bestandteilen der Zusammensetzung 13 und die Zusammensetzung 27 entspricht in ihren Bestandteilen der Zusammensetzung 14.

Zugfestigkeit, Bruchdehnung und E-Modul (DIN EN ISO 527)

Eine Klebstoffprobe wurde zwischen zwei Teflonpapieren auf eine Schichtdicke von 2mm verpresst. Nach 35 min Aushärtung bei 175°C wurden die Teflonpapiere entfernt und die Probekörper nach DIN-Norm Zustand ausgestanzt. Die Prüfkörper wurden unter Normklima mit einer Zuggeschwindigkeit von 2 mm/min gemessen. Die Zugfestigkeit, Bruchdehnung und das E-Modul 0,05-0,25% wurden gemäss DIN EN ISO 527 bestimmt.

Zugscherfestigkeit (LSS) (DIN EN 1465)

Gereinigte und mit Anticorit PL 3802-39S rückbeölte Prüfbleche von Stahl H420+Z (Dicke 1,2 mm) wurden auf einer Klebfläche von 25 x 10mm mit Glaskugeln als Abstandshalter in einer Schichtdicke von 1.5 mm mit dem Klebstoff verklebt und unter den angegebenen Härtungsbedingungen ausgehärtet.

Härtungsbedingungen: a) 35 min bei 175°C Ofentemperatur.

Die Zugscherfestigkeit wurde auf einer Zugmaschine bei einer Zuggeschwindigkeit von 10mm/min in einer 3-fach Bestimmung gemäss DIN EN 1465 bestimmt.

Winkelschälfestigkeit (T-Peel) (DIN 53281)

Es wurden Prüfbleche a 130 x 25 mm aus Stahl DC-04+ZE (Dicke 0,8mm) präpariert. Prüfbleche wurden auf einer Höhe von 30 mm mit einer geeigneten Stanzmaschine abgewickelt (90°). Die gereinigten und mit Anticorit PL 3802-39S rückbeölten Flächen von 100 x 25 mm wurden mit Glaskugeln als Abstandshalter in einer Schichtdicke von 0,3 mm mit dem Klebstoff verklebt und für 35 min Verweilzeit ab Erreichen einer Ofentemperatur von 175°C ausgehärtet. Die Winkelschälfestigkeit wurde auf einer Zugmaschine mit einer Zuggeschwindigkeit von 100 mm/min in einer 2-fach Bestimmung als Schälkraft in N/mm im Bereich des Traversenweges von 1/6-bis 5/6 Weglänge bestimmt.

Schlagschälfestigkeit (gemäss ISO 11343)

Die Probenkörper wurden mit dem Klebstoff und Stahl DC04+ZE mit dem Mass 90 x 20 x 0,8mm hergestellt. Dabei betrug die Klebfläche 20 x 30mm bei einer Schichtdicke von 0,3mm und Glaskugeln als Abstandshalter. Die Messung der Schlagschälfestigkeit erfolgte jeweils bei den angegebenen Temperaturen (RT = 23°C, -30°C) als Dreifachbestimmung auf einem Zwick 450 Schlagpendel bei 2 m/s. Als Schlagschälfestigkeit, wird die gemittelte Kraft in N/mm unter der Messkurve von 25% bis 90% gemäss ISO11343 angegeben.

Die Klebstoffe wurden bei 35 min bei 175°C Ofentemperatur gehärtet.

Viskosität

Viskositätsmessungen an den Klebstoffen erfolgten 1d nach Herstellung auf einem Rheometer vom Typ MCR 101 des Herstellers Anton Paar oszillatorisch unter Verwendung einer Platten-Platten Geometrie bei einer Temperatur von 25°C bzw. 50°C mit folgenden Parametern: 5 Hz, 1 mm Spalt, Platte-Platte-Abstand 25 mm, 1% Deformation.

Für die Herstellung der Zähigkeitsverbesserer 1 bis 9 wurden folgende Handelsprodukte verwendet:

Tabelle 1:

| Verbindung | Beschreibung | Hersteller |
|---|---|---|
| BHT (Ionol® CP) | Stabilisator Butylhydroxytoluol | Evonik |
| PolyTHF® 2000 | difunktionelles Polytetramethylenetherglykol mit einer Molmasse von 2000 g/mol | BASF |
| Poly bd® R45V | Hydroxyl terminiertes Polybutadien mit einer | Cray Valley |
| | Molmasse von 2800 g/mol, OH-Funktionalität ca. 2,4-2,6 | |
| Vestanat IPDI | Isophorondiisocyanat | Evonik |
| Dibutylzinndilaurat | Katalysator | Thorson |
| 4-Methoxyphenol | Blockierungsmittel | Solvay |
| Phenol | Blockierungsmittel | Sigma-Aldrich |
| Caprolactam | Blockierungsmittel | Sigma-Aldrich |
| Methylethylketoxim | Blockierungsmittel | Sigma-Aldrich |
| 2-Benzoxazolinon | Blockierungsmittel | Synthesia |
| 3,5-Dimethylpyrazol | Blockierungsmittel | Chemtura |
| 2,2-Diallylbisphenol A | Blockierungsmittel | Sigma-Aldrich |

**Beispiel 1: Zähigkeitsverbesserer D1 (Phenol [1,2 eq.] als**

**Blockierungsmittel, PolyTHF2000/Poly BD R45HTLO backbone)**

225 g PolyTHF 2000, 225 g Poly bd R45V und 2,25 g BHT als Stabilisator wurden 1h unter minimalem Rühren im Vakuum bei 90°C entwässert. Anschließend wurden 90,83 g Isophorondiisocyanat (IPDI) und 0,059 g Dibutylzinndilaurat (DBTDL) zugegeben. Die Reaktion wurde 2 h unter Vakuum bei 90°C bei mäßig starkem Rühren durchgeführt, um ein Isocyanat-terminiertes Polymer zu erhalten: Gemessener freier NCO-Gehalt: 3,05%.

Zu dem erhaltenen NCO-terminierten Polymer wurden 0,117 g Dibutylzinndilaurat (DBTDL) und 44,35 g Phenol gegeben und für 5 h unter Vakuum bei 110°C die Isocyanatgruppen abreagiert. Gemessener freier NCO-Gehalt: (direkt nach Herstellung) 0,53%, (1 Tag nach Herstellung) 0,24%.

**Beispiel 2: Zähigkeitsverbesserer D2 (4-Methoxyphenol [1.2 eq.] als**

**Blockierungsmittel, PolyTHF2000/PolyBD R45V als backbone)**

200 g PolyTHF 2000, 200 g Poly bd R45V und 2,00 g BHT als Stabilisator wurden 1h unter minimalem Rühren im Vakuum bei 90°C entwässert. Anschließend wurden 80,64 g Isophorondiisocyanat (IPDI) und 0,053 g Dibutylzinndilaurat (DBTDL) zugegeben. Die Reaktion wurde 2 h unter Vakuum bei 90°C bei mäßig starkem Rühren durchgeführt, um ein Isocyanat-terminiertes Polymer zu erhalten: Gemessener freier NCO-Gehalt: 2,81%.

Zu dem erhaltenen NCO-terminierten Polymer wurden 0,106 g Dibutylzinndilaurat (DBTDL) und 47,93 g 4-Methoxyphenol (HQMME) gegeben und für 5 h unter Vakuum bei 110°C die Isocyanatgruppen abreagiert. Gemessener freier NCO-Gehalt: (direkt nach Herstellung) 2,82%, (1 Tag nach Herstellung) 0,09%.

**Beispiel 3: Zähigkeitsverbesserer D3 (4-Methoxyphenol [1,2eq.] als**

**Blockierungsmittel, PolyTHF 2000 als backbone)**

350 g PolyTHF 2000 und 3,50 g BHT als Stabilisator wurden 1h unter minimalem Rühren im Vakuum bei 90°C entwässert. Anschließend wurden 77,82 g Isophorondiisocyanat (IPDI) und 0,048 g Dibutylzinndilaurat (DBTDL) zugegeben. Die Reaktion wurde 2 h unter Vakuum bei 90°C bei mäßig starkem Rühren durchgeführt, um ein Isocyanat-terminiertes Polymer zu erhalten: Gemessener freier NCO-Gehalt: 3,35%.

Zu dem erhaltenen NCO-terminierten Polymer wurden 0,096 g Dibutylzinndilaurat (DBTDL) und 50,76 g 4-Methoxyphenol (HQMME) gegeben und für 5 h unter Vakuum bei 110°C die Isocyanatgruppen abreagiert. Gemessener

freier NCO-Gehalt: (direkt nach Herstellung) 0.48%, (1 Tag nach Herstellung) 0,23%.

Viskosität (1 Tag nach Herstellung): 422 Pa*s bei 25°C, 82 Pa*s bei 50°C.

**Beispiel 4: Zähigkeitsverbesserer D4 (2-Benzoxazolinon [1,2eq.] als**

**Blockierungsmittel, PolyTHF 2000 als backbone)**

400 g PolyTHF 2000 und 4,50 g BHT als Stabilisator wurden 1h unter minimalem Rühren im Vakuum bei 90°C entwässert. Anschließend wurden 88,62 g Isophorondiisocyanat (IPDI) und 0,055 g Dibutylzinndilaurat (DBTDL) zugegeben. Die Reaktion wurde 2 h unter Vakuum bei 90°C bei mäßig starkem Rühren durchgeführt, um ein Isocyanat-terminiertes Polymer zu erhalten: Gemessener freier NCO-Gehalt: 3,61 %.

Zu dem erhaltenen NCO-terminierten Polymer wurden 0,110 g Dibutylzinndilaurat (DBTDL) und 59,64 g Benzoxazolinon gegeben und für 3 h unter Vakuum bei 110°C die Isocyanatgruppen abreagiert. Gemessener freier NCO-Gehalt: 0.24%,

**Beispiel 5: Zähigkeitsverbesserer D5 (3,5-Dimethylpyrazol [1,2eq.] als**

**Blockierungsmittel, PolyTHF 2000, Poly bd R45V als backbone)**

225 g PolyTHF 2000, 225g Poly bd R45V und 2,25 g BHT als Stabilisator wurden 1h unter minimalem Rühren im Vakuum bei 90°C entwässert. Anschließend wurden 77,82 g Isophorondiisocyanat (IPDI) und 0,058 g Dibutylzinndilaurat (DBTDL) zugegeben. Die Reaktion wurde 2 h unter Vakuum bei 90°C bei mäßig starkem Rühren durchgeführt, um ein Isocyanat-terminiertes Polymer zu erhalten: Gemessener freier NCO-Gehalt: 3,08 %.

Zu dem erhaltenen NCO-terminierten Polymer wurden 0,116 g Dibutylzinndilaurat (DBTDL) und 38,11 g 3.5-Dimethylpyrazol gegeben und für 2 h unter Vakuum bei 110°C die Isocyanatgruppen abreagiert. Gemessener freier NCO-Gehalt: 0.0%

**Beispiel 6: Zähigkeitsverbesserer D6 (Dibutylamin [1,0eq.] als**

**Blockierungsmittel, PolyTHF 2000, Poly bd R45V als backbone)**

175g PolyTHF 2000, 175g Poly bd R45V und 1,75 g BHT als Stabilisator wurden 1h unter minimalem Rühren im Vakuum bei 90°C entwässert. Anschließend wurden 70,56 g Isophorondiisocyanat (IPDI) und 0,046 g Dibutylzinndilaurat (DBTDL) zugegeben. Die Reaktion wurde 2 h unter Vakuum bei 90°C bei mäßig starkem Rühren durchgeführt, um ein Isocyanat-terminiertes Polymer zu erhalten: Gemessener freier NCO-Gehalt: 2,90%.

Zu dem erhaltenen NCO-terminierten Polymer wurden 0,92 g Dibutylzinndilaurat (DBTDL) und 37,52 g Dibutylamin gegeben und für 3 h unter Vakuum bei 70°C die Isocyanatgruppen abreagiert. Gemessener freier NCO-Gehalt: 0.0%

**Beispiel 7: Zähigkeitsverbesserer D7 (MEKO [1,2 eq.] als Blockierungsmittel)**

200 g PolyTHF 2000, 200 g Poly BD R45V und 2.00 g BHT als Stabilisator wurden 1h unter minimalem Rühren im Vakuum bei 90°C entwässert. Anschließend wurden 80,74 g Isophorondiisocyanat (IPDI) und 0,052 g Dibutylzinndilaurat (DBTDL) zugegeben. Die Reaktion wurde 2 h unter Vakuum bei 90°C bei mäßig starkem Rühren durchgeführt, um ein Isocyanat-terminiertes Polymer zu erhalten: Gemessener freier NCO-Gehalt: 2,91%.

Zu dem erhaltenen NCO-terminierten Polymer wurden 0,104 g Dibutylzinndilaurat (DBTDL) und 34.82 g 2-Butanoxim (MEKO) gegeben und für 1 h unter Vakuum bei 110°C die Isocyanatgruppen abreagiert. Gemessener freier NCO-Gehalt: 0,00%.

**Beispiel 8: Zähigkeitsverbesserer D8 (nicht erfindungsgemäss) (2,2-Diallylbisphenol A [1,2 eq.] als Blockierungsmittel)**

290 g PolyTHF 2000, und 2,90 g BHT als Stabilisator wurden 1h unter minimalem Rühren im Vakuum bei 90°C entwässert. Anschließend wurden 64,25 g Isophorondiisocyanat (IPDI) und 0,046 g Dibutylzinndilaurat (DBTDL) zugegeben. Die Reaktion wurde 2h unter Vakuum bei 90°C bei mäßig starkem Rühren durchgeführt, um ein Isocyanat-terminiertes Polymer zu erhalten: Gemessener freier NCO-Gehalt: 3,36%.

Zu dem erhaltenen NCO-terminierten Polymer wurden 0,092 g Dibutylzinndilaurat (DBTDL) und 104.76 g (2,2-Diallylbisphenol gegeben und für 5 h unter Vakuum bei 110°C die Isocyanatgruppen abreagiert. Gemessener freier

NCO-Gehalt nach 5h : 0,74%.

Gemessener freier NCO-Gehalt nächster Tag bei RT: 0,36%.

**Beispiel 9: Zähigkeitsverbesserer D9 (nicht erfindungsgemäss)**

**(Caprolactam [1,2 eq.] als Blockierungsmittel)**

200 g PolyTHF 2000, 200 g Poly bd R45V und 2,00 g BHT als Stabilisator wurden 1h unter minimalem Rühren im Vakuum bei 90°C entwässert. Anschließend wurden 80,74 g Isophorondiisocyanat (IPDI) und 0,053 g Dibutylzinndilaurat (DBTDL) zugegeben. Die Reaktion wurde 2 h unter Vakuum bei 90°C bei mäßig starkem Rühren durchgeführt, um ein Isocyanat-terminiertes Polymer zu erhalten: Gemessener freier NCO-Gehalt: 3,026%.

Zu dem erhaltenen NCO-terminierten Polymer wurden 0,106 g Dibutylzinndilaurat (DBTDL) und 47,01 g Caprolactam gegeben und für 3 h unter Vakuum bei 110°C die Isocyanatgruppen abreagiert. Gemessener freier NCO-Gehalt: 0,00%.

**Beispielklebstoffe 1 bis 9**

Die in den Beispielen 1 bis 9 hergestellten Zähigkeitsverbesserer D1 bis D9 wurden jeweils zur Herstellung von Epoxidharzzusammensetzungen gemäß Tabelle 2 verwendet.

Zusammensetzungen und Anteile für Epoxidharzzusammensetzungen, die einen der Zähigkeitsverbesserer 1 bis 9 enthalten, sind in Tabelle 2 zusammengefasst. D-X bezieht sich dabei auf die vorstehend hergestellten Zähigkeitsverbesserer D1, D2 usw.

Tabelle 2

| | **Gewichtsteile** | **Chemische Zusammensetzung** | **Funktion** |
|---|---|---|---|
| | 23,0 | Epoxidharz basierend auf Bisphenol A, flüssig | Epoxidharzmatrix |
| | 12,0 | Epoxidharz basierend auf Bisphenol A, fest | Epoxidharzmatrix |
| | 0,5 | p-Tert-butylphenylglycidylether | Reaktivverdünner |
| | 50,0 | Blockiertes Polyurethan, D-X | Zähigkeitsverbesserer |
| | 2,43 | Dicyandiamid | Härter |
| | 0,13 | Urone | Härter Beschleuniger |
| | 5,0 | $CaCO_3$ | Füllstoff |
| | 6,0 | Calciumoxid | Feuchtigkeitsfänger |
| | 8,0 | Pyrogene Kieselsäure | Thixotropiermittel |
| Gesamt: | 107,06 | | |
| Dicy-Index: | 5,50 mol EP/Dicy | | |

Die jeweiligen Epoxidharzzusammensetzungen wurden in einer Ansatzgrösse von 350 g in einem Planetenmischer gemischt. Hierzu wurde die Mischbüchse mit den flüssigen Komponenten gefolgt von den festen Komponenten gefüllt, und wurden bei 70°C unter Vakuum gemischt. Während des Mischvorgangs (ca. 45 min) wurde das Vakuum mehrmals gebrochen und das Mischwerkzeug abgestreift. Nach Erhalt einer homogenen Mischung wurde die Epoxidharzzusammensetzung in Kartuschen abgefüllt und bei Raumtemperatur gelagert.

Die Tabellen 3 und 4 zeigen die Ergebnisse der Evaluation der erhaltenen Epoxidharzzusammensetzungen mit den Zähigkeitsverbesserern D1-9.

Tabelle 3: (Positiv-Beispiele)

| Zusammensetzung | **1** | **2** | **3** | **4** | **5** | **6** | **7** |
|---|---|---|---|---|---|---|---|
| Zähigkeitsverbesserer | D1 | D2 | D3 | D4 | D5 | D6 | D7 |
| Blockierungsmittel | Phenol | HQMME | HQMME | 2- Benzoxazolinon | 3.5-Dimethylpyrazol | Dibutylamin | MEKO |
| Backbone | PolyTHF2000 Poly bd R45V | PolyTHF2000 Poly bd R45V | PolyTHF2000 | PolyTHF2000 | PolyTHF2000Poly bd R45V | PolyTHF2000Poly bd R45V | PolyTHF 2000 PolyBD R45V |
| Max. Dehnung [mm]<br>Max. Kaft [N] | 2.5<br>3151 | 3.2<br>1933 | 3.8<br>2304 | 4.0<br>3972 | 3.1<br>1178 | 3.5<br>2025 | 3.2<br>2503 |
| E-Modul. [MPa]<br>Zugfestigk. [MPa]<br>Bruchdehnung [%] | 336<br>16,5<br>141 | 236<br>12,9<br>108 | 256<br>15,0<br>154 | 433<br>16,4<br>115 | 156<br>5,6<br>40 | 183<br>7,9<br>83 | 264<br>10,6<br>47 |
| LSS [MPa] | 17,1 | 16,1 | 17,1 | 14,6 | 12,1 | 15,2 | 15,8 |
| T-peel [N/mm] | 14,6 | 10,5 | 13,6 | 11,3 | 8,1 | 13,0 | 11,0 |
| I-Peel [N/mm] | 54,2 | 42,4 | 62,8 | 36,5 | 36,4 | 53,7 | 46,0 |
| Viskosität [Pa*s] 25°C 50°C | 1738<br>559 | 1583<br>497 | 1470<br>559 | 1319<br>452 | 1716<br>603 | 1534<br>530 | 1636<br>553 |

Tabelle 4: (Negativ Beispiele)

| Zusammensetzung | **8** | **9** |
|---|---|---|
| Zähipkeitsverbesserer | D8 | D9 |
| Blockierungsmittel | Diallylbis-phenol A | Caprolactam |
| Backbone | PolyTHF2000 | PolyTHF 2000<br>PolyBD R45V |
| Max. Dehnung [mm]<br>Max. Kraft [N] | 0.5<br>166 | 0.4<br>179 |
| E-Modul. [MPa]<br>Zugfestigk. [MPa]<br>Bruchdehnung [%] | 402<br>17,4<br>95 | 299<br>16,6<br>53 |
| LSS [MPa] | 17,8 | 15,3 |
| T-peel [N/mm] | 7,6 | 5,9 |
| I-Peel [N/mm] RT | 49,4 | 31,0 |
| Viskosität [Pa*s] 25°<br>Viskosität [Pa*s] 50°C | 6387<br>1326 | 1652<br>511 |

**Zusammensetzungen 10-24**

Die Zähigkeitsverbesserer D2, D3 und D4 wurden in unterschiedlichen Konzentrationen eingesetzt um Klebstoffe gemäss Tabelle 5 herzustellen. Das eingesetzte Epoxidharz "Bisphenol A Epoxidharz" ist eine Mischung von 2 Teilen flüssiges Epoxidharz basierend auf Bisphenol A und einem Teil festes Epoxidharz basierend auf Bisphenol A.

Tabellen 6-8 zeigen die Ergebnisse der Evaluation der erhaltenen Klebstoffe 10-25 mit den Zähigkeitsverbesserern D2, D3 und D4.

Die maximale Längenausdehnung in Abhängigkeit vom Anteil des Zähigkeitsverbesserers ist in den Figuren 2 bis 4 dargestellt.

Tabelle 5: Konzentrationsreihen mit D2, D3, D4, *Gewichtsverhältnis Epoxidharz A / Zähigkeitsverbesserer D

| Zusammensetzung | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|
| | **Gewichtsteile** | | | | | | | | | | | | | | |
| Bisphenol A Epoxidharz | 70 | 60 | 55 | 46 | 30 | 10 | 60 | 55 | 46 | 30 | 10 | 60 | 46 | 30 | 10 |
| **Zähigkeitsverbesserer D2** | **10** | **20** | **25** | **34** | **50** | **70** | - | -- | -- | -- | -- | -- | -- | -- | -- |
| **Zähigkeitsverbesserer D3** | - | -- | -- | -- | -- | -- | **20** | **25** | **34** | **50** | **70** | -- | -- | -- | -- |
| **Zähigkeitsverbesserer D4** | - | -- | -- | -- | -- | -- | - | -- | -- | -- | -- | **20** | **34** | **50** | **70** |
| Calciumcarbonat | 7 | 7 | 7 | 7 | 7 | 7 | 7 | 7 | 7 | 7 | 7 | 7 | 7 | 7 | 7 |
| Calciumoxid | 5 | 5 | 5 | 5 | 5 | 5 | 5 | 5 | 5 | 5 | 5 | 5 | 5 | 5 | 5 |
| Pyrogene Kieselsäure | 8 | 8 | 8 | 8 | 8 | 8 | 8 | 8 | 8 | 8 | 8 | 8 | 8 | 8 | 8 |
| Dicyandiamid | 5.77 | 4.95 | 4.54 | 3.79 | 2.47 | 0.82 | 4.95 | 4.54 | 3.79 | 2.47 | 0.82 | 4.95 | 3.79 | 2.47 | 0.82 |
| Urone | 0.30 | 0.26 | 0.24 | 0.20 | 0.13 | 0.04 | 0.26 | 0.24 | 0.20 | 0.13 | 0.04 | 0.26 | 0.20 | 0.13 | 0.04 |
| A/D* | 7 | 3 | 2.2 | 1.4 | 0.6 | 0.2 | 3 | 2.2 | 1.4 | 0.6 | 0.2 | 3 | 1.4 | 0.6 | 0.2 |

Tabelle 6: Resultate der Zusammensetzungen 10-15 mit D2

| Zusammensetzung | **10** | **11** | **12** | **13** | **14** | **15** |
|---|---|---|---|---|---|---|
| D2 Gew.-Teile | 10% | 20% | 25% | 34% | 50% | 70% |
| Max. Dehnung [mm]<br>Max. Kraft [N] | 1.40<br>3415 | 1.70<br>4164 | 2.16<br>4390 | 2.40<br>4072 | 3.30<br>3010 | 5.20<br>265 |
| E-Modul. [MPa]<br>Zugfestigk. [MPa]<br>Bruchdehnung [%] | 1860<br>38.5<br>4 | 1560<br>34.5<br>8 | 1320<br>29.8<br>8 | 966<br>25.5<br>19 | 291<br>15<br>121 | 2<br>1.8<br>262 |
| T-peel [N/mm] | **2.6** | **8.9** | **10.9** | **11.4** | **11.3** | **4.8** |
| I-Peel [N/mm] 23°C | 10.4 | 27.5 | 40.8 | 41.6 | 43.2 | 22.4 |
| I-Peel [N/mm] -30°C | 4.8 | 26.4 | 33.5 | 44.3 | 51.7 | 41.3 |

Tabelle 7: Resultate der Zusammensetzungen 16-20 mit D3

| Zusammensetzung | **16** | **17** | **18** | **19** | **20** |
|---|---|---|---|---|---|
| D3 Gew.-Teile | 20% | 25% | 34% | 50% | 70% |
| Max. Dehnung [mm]<br>Max. Kraft [N] | 1.6<br>2439 | 2.1<br>4459 | 2.3<br>3537 | 3.8<br>2303 | Zusammensetzung nicht ausgehärtet |
| E-Modul. [MPa]<br>Zugfestigk. [MPa]<br>Bruchdehnung [%] | 1430<br>29.4<br>6 | 1340<br>28.3<br>8 | 913<br>20.7<br>14 | 256<br>15<br>154 | |
| T-peel [N/mm] | 4.9 | 12.2 | 12.9 | 13.6 | |
| I-Peel [N/mm] 23°C | 34.1 | 44.8 | 52.7 | 62.8 | |
| I-Peel [N/mm] -30°C | 10.7 | 31.6 | 42.1 | 61.1 | |

Tabelle 8: Resultate der Zusammensetzungen 21-24 mit D4

| Zusammensetzung | **21** | **22** | **22** | **23** | **24** |
|---|---|---|---|---|---|
| D4 Gew.-Teile | 20% | 25% | 34% | 50% | 70% |
| Max. Dehnung [mm]<br>Max. Kraft [N] | 1.6<br>3261 | 1.9<br>4047 | 2.2<br>3974 | **3.2**<br>**3971** | Zusammensetzung nicht ausgehärtet |
| E-Modul. [MPa]<br>Zugfestigk. [MPa]<br>Bruchdehnung [%] | 1200<br>25.9<br>7 | 1190<br>28.4<br>11 | 914<br>25.8<br>21 | 433<br>16.4<br>115 | |
| T-peel [N/mm] | 2.6 | 3.4 | 7.9 | 11.3 | |
| I-Peel [N/mm] 23°C | 15.2 | 30.2 | 37.9 | 36.5 | |
| I-Peel [N/mm] -30°C | 6.3 | 30.5 | 41.6 | 33.8 | |

Tabelle 9

| Zusammensetzung | **Dicke Klebschicht** [mm] | **Zuggeschwindigkeit Vzug [mm/min]** | **25** | **26** | **27** |
|---|---|---|---|---|---|
| Max. Dehnung [mm]<br>Max. Kraft [N] | 1.5 | 0.2 | 0.9<br>2770 | 1.8<br>4196 | 3.1<br>2969 |

(fortgesetzt)

| Zusammensetzung | **Dicke Klebschicht** [mm] | **Zuggeschwindigkeit Vzug [mm/min]** | **25** | **26** | **27** |
|---|---|---|---|---|---|
| Max. Dehnung [mm]<br>Max. Kraft [N] | 1.5 | 0.52 | 1.1<br>2875 | 2.4<br>3961 | 3.1<br>2798 |
| Max. Dehnung [mm]<br>Max. Kraft [N] | 1.5 | 0.68 | 1.3<br>3064 | 2.4<br>3020 | 3.1<br>1712 |

Tabelle 10

| Zusammensetzung | **Dicke Klebschicht** [mm] | **Zuggeschwindigkeit Vzug [mm/min]** | **26** |
|---|---|---|---|
| Max. Dehnung [mm]<br>Max. Kraft [N] | 0.5 | 0.52 | 0.3<br>443 |
| Max. Dehnung [mm]<br>Max. Kraft [N] | 1.0 | 0.52 | 2.31<br>2117 |
| Max. Dehnung [mm]<br>Max. Kraft [N] | 1.5 | 0.52 | 2.4<br>3961 |

Bei den Klebstoffen 10, 11, 15, 16, 20, 21 und 24 handelt es sich um Vergleichsbeispiele, bei den Klebstoffen 12, 13, 14, 17, 18, 19, 22 und 23 handelt es sich um erfindungsgemässe Zusammensetzungen.

## Patentansprüche

**1.** Verfahren zur Verklebung von hitzestabilen Substraten, welches die Schritte umfasst:

i) Applizieren einer einkomponentigen hitzehärtenden Epoxidharzusammensetzung auf die Oberfläche eines hitzestabilen Substrates **S1**, insbesondere eines Metalls;
ii) Kontaktieren der applizierten hitzehärtenden Epoxidharzzusammensetzung mit der Oberfläche eines weiteren hitzestabilen Substrates **S2**, insbesondere eines Metalls, wobei die Dicke der applizierten hitzehärtenden Epoxidharzzusammensetzung nach dem Schritt ii) ≥ 0.8 mm, insbesondere ≥ 1 mm, beträgt;
iii) Erhitzen der Zusammensetzung auf eine Temperatur von 100 - 220°C, insbesondere von 120 - 200°C, bevorzugt zwischen 130 und 150°C, besonders bevorzugt zwischen 130 und 140°C;
wobei die einkomponentige hitzehärtende Epoxidharzzusammensetzung umfasst:

a) mindestens ein Epoxidharz **A** mit durchschnittlich mehr als einer Epoxidgruppe pro Molekül;
b) mindestens einen latenten Härter für Epoxidharze **B;**
c) mindestens einen Zähigkeitsverbesserer **D;**

wobei das Gewichtsverhältnis des mindestens einen Epoxidharz **A** mit durchschnittlich mehr als einer Epoxidgruppe pro Molekül zu dem mindestens einen Zähigkeitsverbesserer **D** von 0.3 - 2.2 beträgt,
und wobei es sich bei dem Zähigkeitsverbesserer **D** um ein endständig blockiertes Polyurethanprepolymer der Formel (I) handelt;

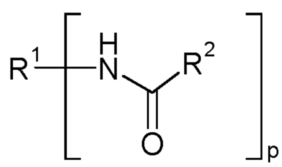 (I)

wobei $R^1$ für einen p-wertigen Rest eines mit Isocyanatgruppen terminierten linearen oder verzweigten Polyurethanprepolymers nach dem Entfernen der endständigen Isocyanatgruppen steht;
p für einen Wert von 2 bis 8 steht; und
$R^2$ steht für eine Blockierungsgruppe, welche sich bei einer Temperatur über 100°C abspaltet, wobei $R^2$ unabhängig voneinander für einen Substituenten steht, welcher ausgewählt ist aus der Gruppe bestehend aus

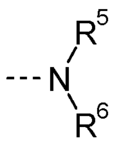, 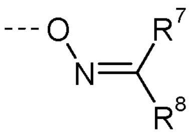, 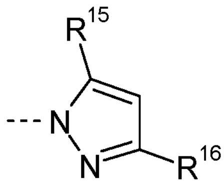. 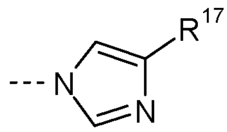,

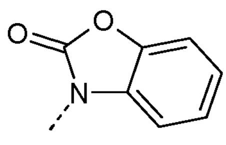

und ---O-$R^{18}$,
wobei
$R^5$, $R^6$, $R^7$ und $R^8$ je unabhängig voneinander für eine Alkyl- oder Cycloalkyl- oder Aralkyl- oder Arylalkyl-Gruppe steht
oder $R^5$ zusammen mit $R^6$, oder $R^7$ zusammen mit $R^8$, einen Teil eines 4- bis 7-gliedrigen Rings bilden, welcher gegebenenfalls substituiert ist;
$R^{15}$, $R^{16}$ und $R^{17}$je unabhängig voneinander für H oder für eine Alkylgruppe oder für eine Arylgruppe oder eine Aralkylgruppe stehen; und
$R^{18}$ für eine Aralkylgruppe oder für eine ein- oder mehrkernige substituierte oder unsubstituierte Aromatengruppe steht, welche gegebenenfalls aromatische Hydroxylgruppen aufweist,

wobei die einkomponentige hitzehärtende Epoxidharzzusammensetzung eine maximale Längenausdehnung **Max. Dehnung** von ≥ 1.65 mm aufweist, bestimmt in einem Zugscherversuch während dem Abkühlen einer erwärmten ausgehärteten Zugscherprobe, und
wobei die maximale Längenausdehnung Max. Dehnung in einem Zugscherversuch bei einer Zuggeschwindigkeit $V_{zug}$ von 0.40 mm/min gemessen wird, und
wobei die Temperatur der Zugscherprobe des Zugscherversuchs bei Beginn der Messung 180°C, insbesondere 190°C, beträgt und bei Beginn der Messung die Zugscherprobe mit einer Abkühlgeschwindigkeite wird 40°C/min auf eine Temperatur von 25°C gekühlt und danach bei dieser Temperatur belassen wird, und wobei es sich bei dem Zugscherversuch um einen Zugscherversuch zur Bestimmung der Zugscherfestigkeit gemäss DIN EN 1465 handelt.

**2.** Verfahren gemäss Anspruch 1, wobei das Gewichtsverhältnis des mindestens einen Epoxidharz **A** mit durchschnittlich mehr als einer Epoxidgruppe pro Molekül zu dem mindestens einen Zähigkeitsverbesserer **D** von 0.4 - 2.0, besonderes bevorzugt 0.5 - 1.8, beträgt.

**3.** Verfahren nach einem der vorgehenden Ansprüche, wobei $R^1$ für einen p-wertigen Rest eines mit Isocyanatgruppen terminierten linearen oder verzweigten Polyurethanprepolymers nach dem Entfernen der endständigen Isocyanatgruppen steht und das Polyurethanprepolymer hergestellt wird aus mindestens einem Diisocyanat oder Triisocyanat sowie aus einem Polymeren $\mathbf{Q_{PM}}$ mit endständigen Amino-, Thiol- oder Hydroxylgruppen.

**4.** Verfahren nach Anspruch 3, wobei es sich bei dem Polymeren $\mathbf{Q_{PM}}$ mit endständigen Amino-, Thiol- oder Hydroxylgruppen um Polyole mit mittleren Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, Polytetramethylenetherglycolen, hydroxylterminierten Polybutadienen, hydroxylterminierten Butadien-Acrylnitril-Copolymeren sowie deren Gemische, insbesondere bevorzugt Polytetramethylenetherglycole und hydroxylterminierte Polybutadiene, handelt.

**5.** Verfahren nach Anspruch 4, wobei es sich bei dem Polymeren $\mathbf{Q_{PM}}$ mit endständigen Amino-, Thiol- oder Hydroxylgruppen um Polyole mit mittleren Molekulargewichten zwischen 600 und 6000 Dalton ausgewählt aus der Gruppe bestehend aus Polytetramethylenetherglycole und hydroxylterminierte Polybutadiene handelt, wobei das Gewichtsverhältnis von Polytetramethylenetherglycol zu Hydroxy-terminiertem Polybutadien im Bereich von 100/0 bis 70/30, bevorzugter von 100/0 bis 60/40, bevorzugter von 100/0 bis 90/10 und ganz besonders bevorzugt bei 100/0, liegt.

**6.** Verfahren nach einem der vorgehenden Ansprüche, wobei die Dicke der applizierten hitzehärtenden Epoxidharzzusammensetzung nach dem Schritt ii) ≥ 1.0 mm, insbesondere ≥ 1.2 mm, vorzugsweise ≥ 1.5 mm, beträgt.

**7.** Verfahren nach einem der vorgehenden Ansprüche, wobei die maximale Längenausdehnung Max. Dehnung in einem Zugscherversuch bei einer Zuggeschwindigkeit $V_{zug}$ von 0.40 mm/min, insbesondere 0.52 mm/min, vorzugsweise 0.68 mm/min, gemessen wird.

**8.** Verfahren nach einem der vorgehenden Ansprüche, wobei in dem Schritt iii) Erhitzen der Zusammensetzung auf eine Temperatur von 100 - 220°C, insbesondere von 120 - 200°C, bevorzugt zwischen 140 und 200°C besonders bevorzugt zwischen 150 und 190°C, die Zusammensetzung für 10 min - 6 h, 10 min - 2 h, 10 min - 60 min, 10 min - 30 min, besonders bevorzugt 10 min - 20 min, bei der vorgenannten Temperatur belassen wird.

**9.** Verfahren nach einem der vorgehenden Ansprüche, wobei es sich bei dem Zugscherversuch um einen Zugscherversuch mit Zugscherprüfkörpern handelt, die folgende Merkmale aufweisen:

- Stahlbleche mit den Massen 25mm x 100mm x 1.5mm,
- Klebefläche der ausgehärteten einkomponentigen hitzehärtenden Epoxidharzzusammensetzung mit den Massen 10mm x 25mm mit einer Dicke von 1.5 mm, vorzugsweise 1.0mm.

**10.** Verfahren nach einem der vorgehenden Ansprüche, wobei die die maximale Längenausdehnung Max. Dehnung ≥ 1.8 mm, vorzugsweise ≥ 2.0 mm, vorzugsweise ≥ 2.145 mm, vorzugsweise ≥ 2.2 mm, vorzugsweise ≥ 2.5 mm, vorzugsweise ≥ 2.8 mm, vorzugsweise ≥ 3.0 mm, vorzugsweise ≥ 3.5 mm, vorzugsweise ≥ 4.0 mm, beträgt.

**11.** Verfahren nach einem der vorgehenden Ansprüche, wobei die gemessene maximale Kraft ≤ 6000 N, vorzugsweise ≤ 5000 N, vorzugsweise ≤ 4500 N, vorzugsweise ≤ 4000 N, vorzugsweise ≤ 3500 N, vorzugsweise ≤ 3000 N, vorzugsweise ≤ 2500 N, vorzugsweise ≤ 2000 N, beträgt.

**12.** Verfahren nach einem der vorgehenden Ansprüche, wobei die gemessene Kraft bei Erreichen der maximalen Längenausdehnung Max. Dehnung von ≥ 1.8 mm, vorzugsweise ≥ 2.0 mm, vorzugsweise 2.145 mm, ≤ 4000 N, vorzugsweise ≤ 3000 N, vorzugsweise ≤ 2500 N, vorzugsweise ≤ 2000 N, vorzugsweise ≤ 1500 N, vorzugsweise ≤ 1000 N, vorzugsweise ≤ 800 N, vorzugsweise ≤ 700 N, beträgt.

**13.** Verfahren nach einem der vorgehenden Ansprüche, wobei es sich um ein Verfahren für den Fahrzeugbau und Sandwichpanelbau handelt.

## Claims

**1.** Method of adhesive bonding of heat-stable substrates, comprising the steps of:

i) applying a one-component thermosetting epoxy resin composition to the surface of a heat-stable substrate **S1**, especially of a metal;
ii) contacting the thermosetting epoxy resin composition applied with the surface of a further heat-stable substrate **S2**, especially of a metal, where the thickness of the thermosetting epoxy resin composition applied is ≥ 0.8 mm, especially ≥ 1 mm, after step ii);
iii) heating the composition to a temperature of 100-220°C, especially of 120-200°C, preferably between 130 and 150°C, more preferably between 130 and 140°C;
wherein the one-component thermosetting epoxy resin composition comprises:

a) at least one epoxy resin **A** having an average of more than one epoxy group per molecule;
b) at least one latent curing agent for epoxy resins **B;**
c) at least one toughness improver **D;**

where the weight ratio of the at least one epoxy resin **A** having an average of more than one epoxy group per molecule to the at least one toughness improver **D** is 0.3-2.2,
and wherein the toughness improver **D** is a terminally blocked polyurethane prepolymer of the formula (I):

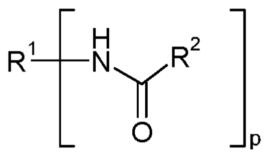

(I)

where $R^1$ is a p-valent radical of a linear or branched polyurethane prepolymer terminated by isocyanate groups after the removal of the terminal isocyanate groups;
p has a value of 2 to 8; and
$R^2$ is a blocking group which is detached at a temperature above 100°C, where $R^2$ is independently a substituent selected from the group consisting of

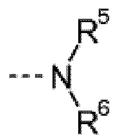 , 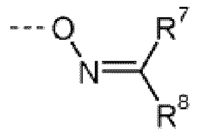 , 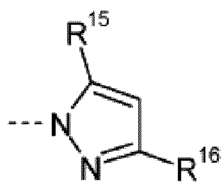 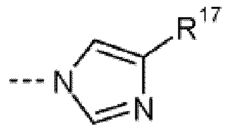 ,

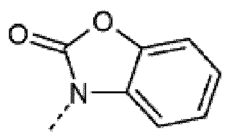

and ---O-$R^{18}$
where
$R^5$, $R^6$, $R^7$ and $R^8$ are each independently an alkyl or cycloalkyl or aralkyl or arylalkyl group
or $R^5$ together with $R^6$, or $R^7$ together with $R^8$, form part of a 4- to 7-membered, optionally substituted ring;
$R^{15}$, $R^{16}$ and $R^{17}$ are each independently H or an alkyl group or an aryl group or an aralkyl group; and
$R^{18}$ is an aralkyl group or is a mono- or polycyclic, substituted or unsubstituted aromatic group optionally having aromatic hydroxyl groups,
wherein the one-component thermosetting epoxy resin composition has a maximum linear expansion **Max. elongation** of ≥ 1.65 mm, determined in a lap shear test during the cooling of a heated cured lap shear specimen, and
wherein the maximum linear expansion Max. elongation is measured in a lap shear test at a strain rate $V_{st}$ of 0.40 mm/min, and
wherein the temperature of the lap shear specimen in the lap shear test is 180°C, especially 190°C, at the start of the measurement and the lap shear specimen is cooled at the start of the measurement at a cooling rate of 40°C/min to a temperature of 25°C and then left at that temperature, where the lap shear test is a lap shear test for determination of lap shear strength according to DIN EN 1465.

2. Method according to Claim 1, wherein the weight ratio of the at least one epoxy resin **A** having an average of more than one epoxy group per molecule to the at least one toughness improver **D** is 0.4-2.0, more preferably 0.5-1.8.

3. Method according to either of the preceding claims, wherein $R^1$ is a p-valent radical of a linear or branched polyurethane prepolymer terminated by isocyanate groups after the removal of the terminal isocyanate groups, and the polyurethane prepolymer is prepared from at least one diisocyanate or triisocyanate and from a polymer $\mathbf{Q_{PM}}$ having terminal amino, thiol or hydroxyl groups.

4. Method according to Claim 3, wherein the polymer $\mathbf{Q_{PM}}$ having terminal amino, thiol or hydroxyl groups comprises polyols having average molecular weights between 600 and 6000 daltons, selected from the group consisting of polyethylene glycols, polypropylene glycols, polyethylene glycol-polypropylene glycol block polymers, polybutylene glycols, polytetramethylene ether glycols, hydroxyl-terminated polybutadienes, hydroxyl-terminated butadiene-acrylonitrile copolymers and mixtures thereof, especially preferably polytetramethylene ether glycols and hydroxyl-terminated polybutadienes.

5. Method according to Claim 4, wherein the polymer $\mathbf{Q_{PM}}$ having terminal amino, thiol or hydroxyl groups comprises polyols having average molecular weights between 600 and 6000 daltons, selected from the group consisting of polytetramethylene ether glycols and hydroxyl-terminated polybutadienes, wherein the weight ratio of polytetramethylene ether glycol to hydroxyl-terminated polybutadiene is in the range from 100/0 to 70/30, more preferably from 100/0 to 60/40, more preferably from 100/0 to 90/10 and most preferably 100/0.

6. Method according to any of the preceding claims, wherein the thickness of the thermosetting epoxy resin composition applied is ≥ 1.0 mm, especially ≥ 1.2 mm, preferably ≥ 1.5 mm, after step ii).

7. Method according to any of the preceding claims, wherein the maximum linear expansion Max. elongation is measured in a lap shear test at a strain rate $V_{st}$ of 0.40 mm/min, especially 0.52 mm/min, preferably 0.68 mm/min.

8. Method according to any of the preceding claims, wherein, in step iii) heating the composition to a temperature of 100-220°C, especially of 120-200°C, preferably between 140 and 200°C, more preferably between 150 and 190°C, the composition is left at the aforementioned temperature for 10 min - 6 h, 10 min - 2 h, 10 min - 60 min, 10 min - 30 min, more preferably 10 min - 20 min.

9. Method according to any of the preceding claims, wherein the lap shear test is a lap shear test having lap shear test specimens having the following features:

   - steel sheets having dimensions of 25 mm x 100 mm x 1.5 mm,
   - bonding area of the cured one-component thermosetting epoxy resin composition having dimensions of 10 mm x 25 mm with a thickness of 1.5 mm, preferably 1.0 mm.

10. Method according to any of the preceding claims, wherein the maximum linear expansion Max. elongation is ≥ 1.8 mm, preferably ≥ 2.0 mm, preferably ≥ 2.145 mm, preferably ≥ 2.2 mm, preferably ≥ 2.5 mm, preferably ≥ 2.8 mm, preferably ≥ 3.0 mm, preferably ≥ 3.5 mm, preferably ≥ 4.0 mm.

11. Method according to any of the preceding claims, wherein the maximum force measured is ≤ 6000 N, preferably ≤ 5000 N, preferably ≤ 4500 N, preferably ≤ 4000 N, preferably ≤ 3500 N, preferably ≤ 3000 N, preferably ≤ 2500 N, preferably ≤ 2000 N.

12. Method according to any of the preceding claims, wherein the force measured on attainment of the maximum linear expansion Max. elongation of ≥ 1.8 mm, preferably ≥ 2.0 mm, preferably 2.145 mm, is ≤ 4000 N, preferably ≤ 3000 N, preferably ≤ 2500 N, preferably ≤ 2000 N, preferably ≤ 1500 N, preferably ≤ 1000 N, preferably ≤ 800 N, preferably ≤ 700 N.

13. Method according to any of the preceding claims, which is a method of motor vehicle construction and sandwich panel construction.

## Revendications

1. Procédé pour le collage de substrats stables à la chaleur, qui comprend les étapes de :

   i) application d'une composition de résine époxyde thermodurcissable à un composant à la surface d'un substrat S1 stable à la chaleur, en particulier d'un métal ;
   ii) mise en contact de la composition de résine époxyde thermodurcissable appliquée avec la surface d'un autre substrat S2 stable à la chaleur, en particulier d'un métal, l'épaisseur de la composition de résine époxyde thermodurcissable appliquée après l'étape ii) étant ≥ 0,8 mm, en particulier ≥ 1 mm ;
   iii) chauffage de la composition à une température de 100-220°C, en particulier de 120-200°C, de préférence entre 130 et 150°C, de manière particulièrement préférée entre 130 et 140°C ;
   la composition de résine époxyde thermodurcissable à un composant comprenant :

      a) au moins une résine époxyde A comprenant en moyenne plus d'un groupe époxyde par molécule ;

b) au moins un durcisseur latent B pour des résines époxyde ;
c) au moins un agent améliorant la ténacité D ;

le rapport en poids de ladite au moins une résine époxyde A présentant en moyenne plus d'un groupe époxyde par molécule audit au moins un agent améliorant la ténacité D étant de 0,3-2,2 et l'agent améliorant la ténacité D étant un prépolymère de polyuréthane bloqué en position terminale de formule (I) ;

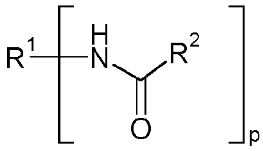

(I)

dans laquelle

$R^1$ représente un radical p-valent d'un prépolymère de polyuréthane linéaire ou ramifié terminé par des groupes isocyanate après l'élimination des groupes isocyanate en position terminale ;
p représente une valeur de 2 à 8 ; et
$R^2$ représente un groupe de blocage, qui se dissocie à une température supérieure à 100°C, $R^2$ représentant, indépendamment, un substituant qui est choisi dans le groupe constitué par

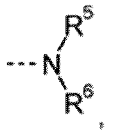,
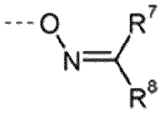,
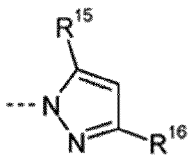
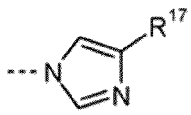

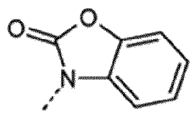

et - - -O-$R^{18}$,

où
$R^5$, $R^6$, $R^7$ et $R^8$ représentent chacun, indépendamment les uns des autres, un groupe alkyle ou cycloalkyle ou aralkyle ou arylalkyle
ou $R^5$, conjointement avec $R^6$, ou $R^7$, conjointement avec $R^8$, forment une partie d'un cycle de 4 à 7 chaînons, qui est le cas échéant substitué ;
$R^{15}$, $R^{16}$ et $R^{17}$ représentent chacun, indépendamment les uns des autres, H ou un groupe alkyle ou un groupe aryle ou un groupe aralkyle ; et
$R^{18}$ représente un groupe aralkyle ou un groupe aromatique à un ou plusieurs noyaux, substitué ou non substitué, qui présente le cas échéant des groupes hydroxyle aromatiques,
la composition de résine époxyde thermodurcissable à un composant présentant une dilatation longitudinale maximal Dilat.Max. ≥ 1,65 mm, déterminée dans un essai de cisaillement en traction pendant le refroidissement d'un échantillon de cisaillement en traction durci chauffé et
la dilatation longitudinale maximale Dilat.Max. étant mesurée dans un essai de cisaillement en traction à une vitesse de traction $V_{traction}$ de 0,40 mm/min et
la température de l'échantillon de cisaillement en traction de l'essai de cisaillement en traction au début de la mesure étant de 180°C, en particulier de 190°C et, au début la mesure, l'échantillon de cisaillement en traction étant refroidi à 40°C/min jusqu'à une température de 25°C et ensuite laissé à cette température et l'essai de cisaillement en traction étant un essai de cisaillement en traction pour la détermination de la résistance au cisaillement en traction selon la norme DIN EN 1465.

**2.** Procédé selon la revendication 1, le rapport en poids de ladite au moins une résine époxyde A présentant en moyenne plus d'un groupe époxyde par molécule audit au moins un agent améliorant la ténacité D étant de 0,4-2,0, de manière particulièrement préférée de 0,5-1,8.

**3.** Procédé selon l'une des revendications précédentes, $R^1$ représentant un radical p-valent d'un prépolymère de polyuréthane linéaire ou ramifié, terminé par des groupes isocyanate, après l'élimination des groupes isocyanate en position terminale et le prépolymère de polyuréthane étant préparé à partir d'au moins un diisocyanate ou triisocyanate ainsi qu'à partir d'un polymère $Q_{PM}$ présentant des groupes amino, thiol ou hydroxyle en position terminale.

**4.** Procédé selon la revendication 3, le polymère $Q_{PM}$ présentant des groupes amino, diol ou hydroxy en position terminale étant des polyols présentant des poids moléculaires moyens entre 600 et 6000 Daltons, choisis dans le groupe constitué par les polyéthylèneglycols, les polypropylèneglycols, les copolymères de polyéthylèneglycol-polypropylèneglycol, les polybutylèneglycols, les polytétraméthylène-étherglycols, les polybutadiènes terminés par hydroxyle, les copolymères de butadiène-acrylonitrile terminés par hydroxyle ainsi que leurs mélanges, en particulier de préférence les polytétraméthylène-étherglycols et les polybutadiènes terminés par hydroxyle.

**5.** Procédé selon la revendication 4, le polymère $Q_{PM}$ présentant des groupes amino, diol ou hydroxy en position terminale étant des polyols présentant des poids moléculaires moyens entre 600 et 6000 Daltons, choisis dans le groupe constitué par les polytétraméthylène-étherglycols et les polybutadiènes terminés par hydroxyle, le rapport en poids de polytétraméthylène-étherglycol à polybutadiène terminé par hydroxyle étant situé dans la plage de 100/0 à 70/30, plus préférablement de 100/0 à 60/40, plus préférablement de 100/0 à 90/10 et de manière tout particulièrement préférée de 100/0.

**6.** Procédé selon l'une des revendications précédentes, l'épaisseur de la composition de résine époxyde thermodurcissable appliquée après l'étape ii) étant ≥ 1,0 mm, en particulier ≥ 1,2 mm, de préférence de ≥ 1,5 mm.

**7.** Procédé selon l'une des revendications précédentes, la dilatation longitudinale maximale Dilat.Max. étant mesurée dans un essai de cisaillement en traction à une vitesse de traction $V_{traction}$ de 0,40 mm/min, en particulier de 0,52 mm/min, de préférence de 0,68 mm/min.

**8.** Procédé selon l'une des revendications précédentes, dans lequel, dans l'étape iii), chauffage de la composition à une température de 100-220°C, en particulier de 120-200°C, de préférence entre 140 et 200°C, de manière particulièrement préférée entre 150 et 190°C, la composition est laissée à la température susmentionnée pendant 10 min-6 h, 10 min-2 h, 10 min-60 min, 10 min-30 min, de manière particulièrement préférée pendant 10 min-20 min.

**9.** Procédé selon l'une des revendications précédentes, l'essai de cisaillement en traction étant un essai de cisaillement en traction avec des éprouvettes de cisaillement en traction qui présentent les caractéristiques suivantes :

- tôle d'acier présentant les dimensions 25 mm x 100 mm x 1,5 mm,
- surface de collage de la composition de résine époxyde thermodurcissable à un composant durcie présentant les dimensions 10 mm x 25 mm à une épaisseur de 1,5 mm, de préférence de 1,0 mm.

**10.** Procédé selon l'une des revendications précédentes, la dilatation longitudinale maximale Dilat.Max. étant ≥ 1,8 mm, de préférence ≥ 2,0 mm, de préférence ≥ 2,145 mm, de préférence ≥ 2,2 mm, de préférence ≥ 2,5 mm, de préférence ≥ 2,8 mm, de préférence ≥ 3,0 mm, de préférence ≥ 3,5 mm, de préférence ≥ 4,0 mm.

**11.** Procédé selon l'une des revendications précédentes, la force maximale mesurée étant ≤ 6000 N, de préférence ≤ 5000 N, de préférence ≤ 4500 N, de préférence ≤ 4000 N, de préférence ≤ 3500 N, de préférence ≤ 3000 N, de préférence ≤ 2500 N, de préférence ≤ 2000 N.

**12.** Procédé selon l'une des revendications précédentes, la force mesurée, lorsque la dilatation longitudinale maximale Dilat.Max. ≥ 1,8 mm, de préférence ≥ 2,0 mm, de préférence ≥ 2,145 mm est atteinte, étant ≤ 4000 N, de préférence ≤ 3000 N, de préférence ≤ 2500 N, de préférence ≤ 2000 N, de préférence ≤ 1500 N, de préférence ≤ 1000 N, de préférence ≤ 800 N, de préférence ≤ 700 N.

**13.** Procédé selon l'une des revendications précédentes, le procédé étant un procédé pour la construction de véhicules et de panneaux sandwich.

Fig. 1

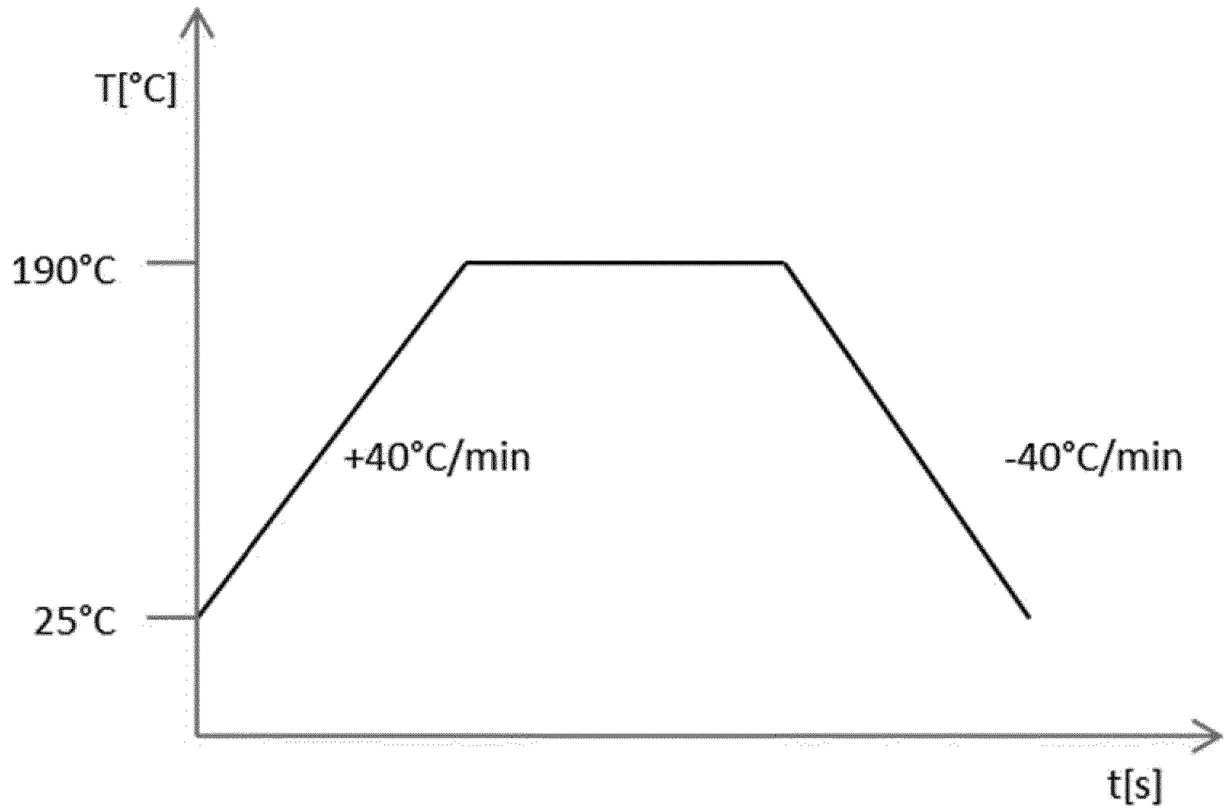

Fig. 2

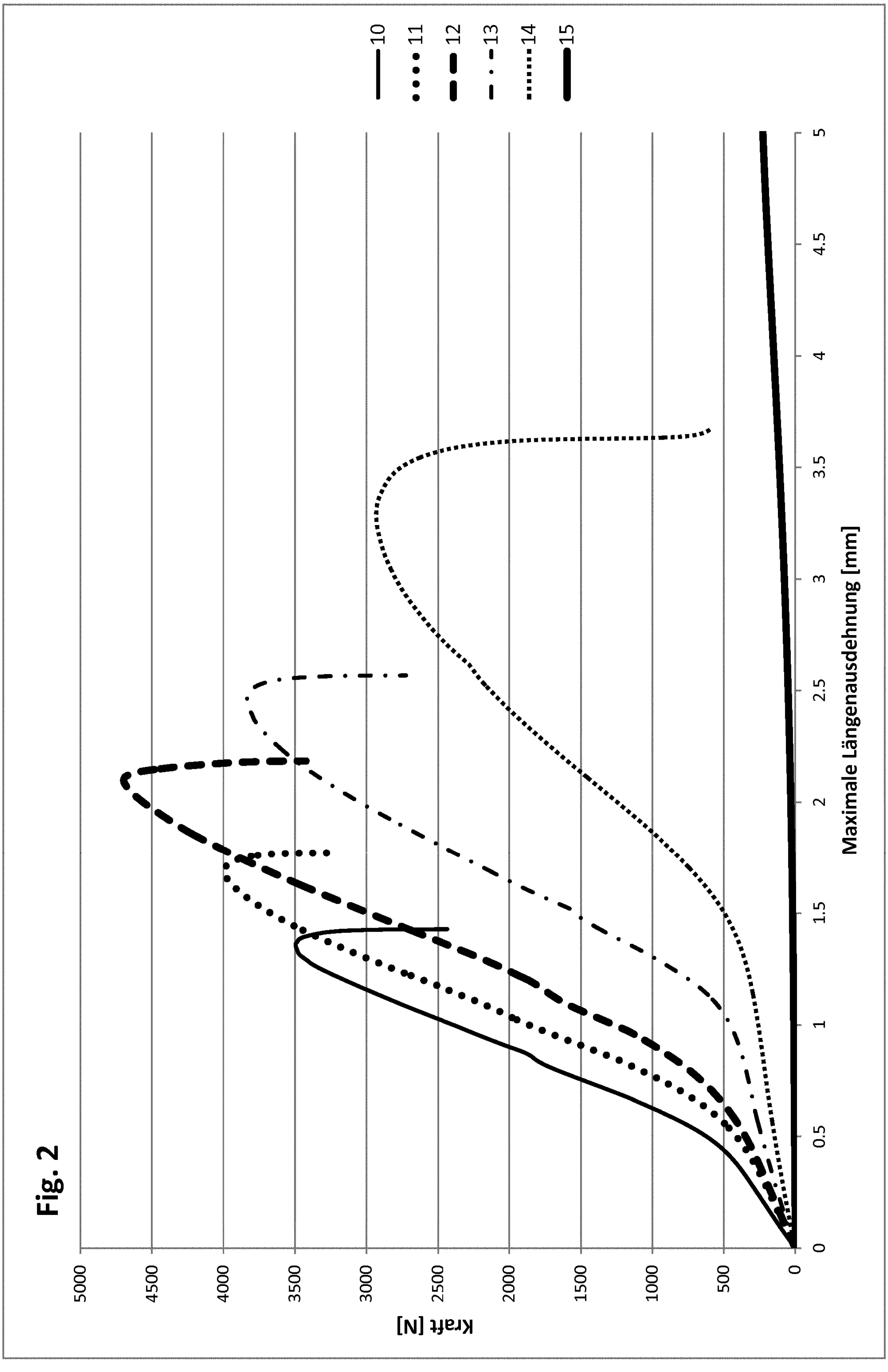
Kraft [N]
0
500
1000
1500
2000
2500
3000
3500
4000
4500
5000
Maximale Längenausdehnung [mm]
0
0.5
1
1.5
2
2.5
3
3.5
4
4.5
5
10
11
12
13
14
15

Fig. 3

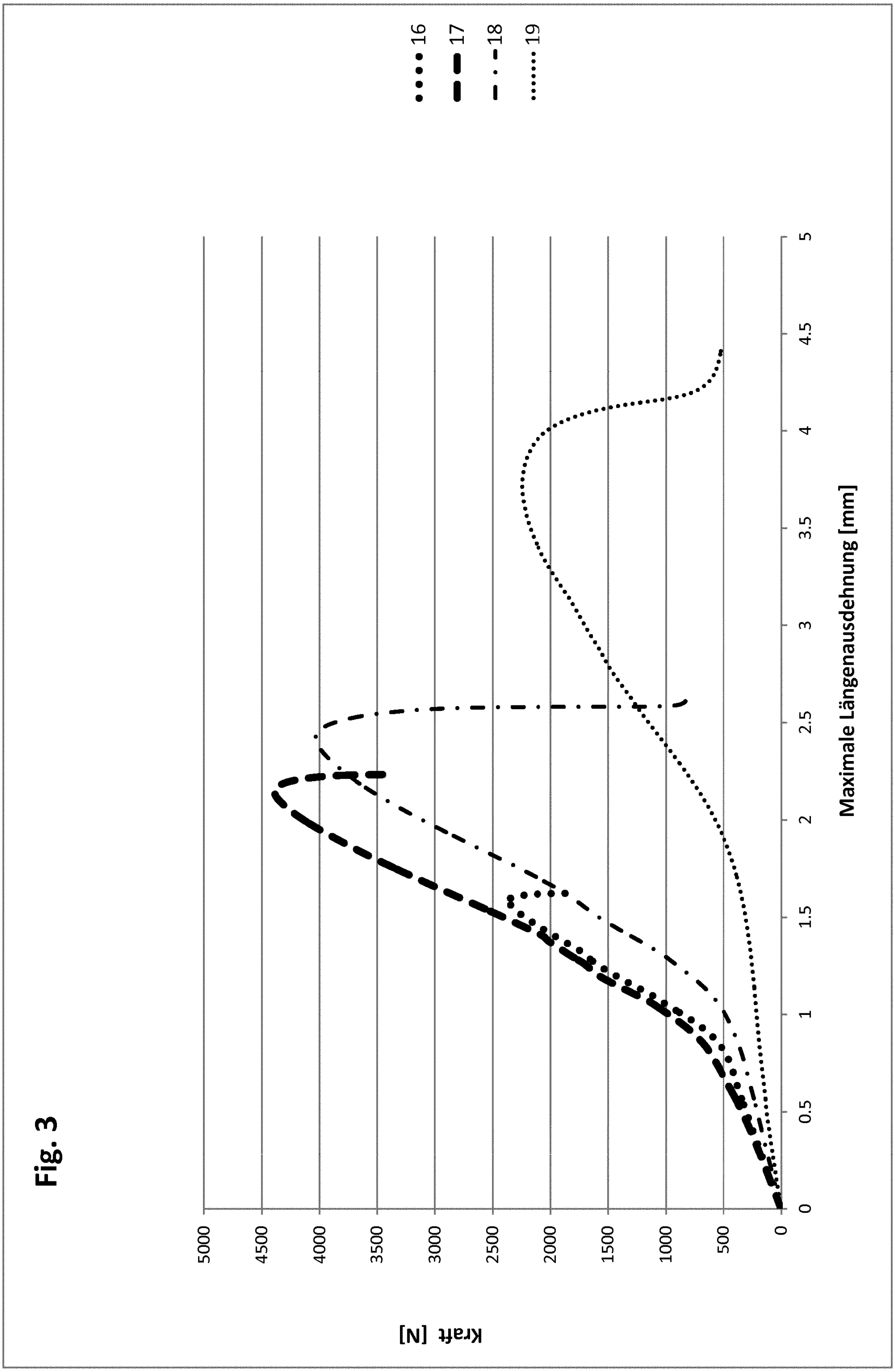
16
17
18
19
Kraft [N]
5000
4500
4000
3500
3000
2500
2000
1500
1000
500
0
0
0.5
1
1.5
2
2.5
3
3.5
4
4.5
5
Maximale Längenausdehnung [mm]

Fig. 4

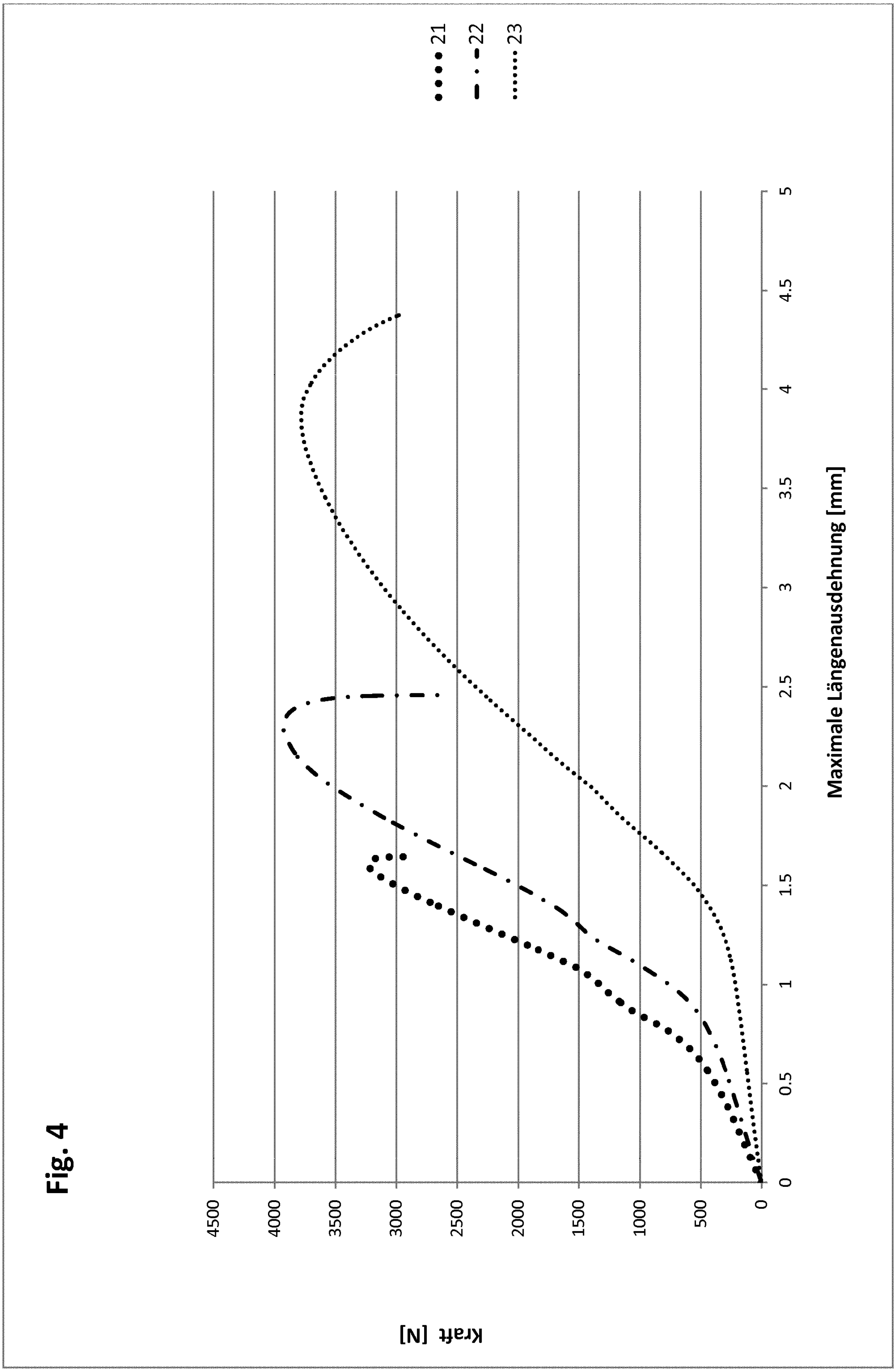
Kraft [N]
4500
4000
3500
3000
2500
2000
1500
1000
500
0
0
0.5
1
1.5
2
2.5
3
3.5
4
4.5
5
Maximale Längenausdehnung [mm]
21
22
23

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1916272 A1